(19) Europäisches Patentamt
European Patent Office
Office européen des brevets

(11) **EP 0 500 244 B1**

(12) **EUROPEAN PATENT SPECIFICATION**

(45) Date of publication and mention
of the grant of the patent:
**14.01.1998 Bulletin 1998/03**

(51) Int Cl.6: **G07F 19/00**, H04L 9/08,
G07F 7/10

(21) Application number: **92301045.8**

(22) Date of filing: **07.02.1992**

(54) **Cipher communication method for transaction data**

Schlüsselübertragungsverfahren für Transaktionsdaten

Méthode pour la communication des clés de chiffrage pour données de transactions

(84) Designated Contracting States:
**DE FR GB**

(30) Priority: **08.02.1991 JP 17591/91**

(43) Date of publication of application:
**26.08.1992 Bulletin 1992/35**

(73) Proprietor: **KABUSHIKI KAISHA TOSHIBA**
**Kawasaki-shi, Kanagawa-ken 210 (JP)**

(72) Inventor: **Iijima, Yasuo,**
**c/o Intellectual Property Division**
**Minato-ku, Tokyo (JP)**

(74) Representative: **BATCHELLOR, KIRK & CO.**
**2 Pear Tree Court**
**Farringdon Road**
**London EC1R 0DS (GB)**

(56) References cited:
**EP-A- 0 284 133**          **EP-A- 0 304 547**
**EP-A- 0 387 599**          **WO-A-88/01818**

## Description

The present invention relates generally to a cipher communication method for communicating transaction data between electronic apparatus, and more particularly, to a cipher communication method for communicating such data between electronic apparatus coupled in an on-line system.

In data communications on a system consisting of a host computer and a terminal, such as an IC card, in order to assure security of communication data, the system has been so far used, in which original data are transmitted after enciphering at a sending side and received at the receiving side after deciphering. In conventional data communication system, at the host computer and the terminals data are enciphered/deciphered using key data for a data security of transaction data when performing a data transaction such as transmission data between a host computer and an IC card. At this time, prior to the data transaction, the transaction key data to be used for the said data transaction are enciphered and transmitted from the host computer and deciphered and stored in the storage means at the IC side. Enciphered data received from the host computer are deciphered using the transaction key data stored in the storage means. Thus, the data communication is achieved between the host computer and the IC card.

EP-A2-0 387 599 discloses a method of encrypting data for on-line data communication between a host computer and each of a plurality of remote terminals, wherein a unique dynamic key is periodically generated for each said terminal using a system seed key residing only in the host computer, said dynamic key being for use by said terminal in encrypting data transmitted to said host computer and for decrypting data received from said host computer, each said terminal further including means for storing a previously generated dynamic key for said terminal, comprising the following steps:

a. receiving at said host computer a new dynamic key request from one of said terminals, said new dynamic key request including a predetermined terminal identifier for said terminal;
b. determining in said host computer the dynamic key previously generated for said terminal by said host wherein said dynamic key previously generated by said host is currently stored in said terminal;
c. generating in said host computer a new dynamic key for said terminal as a function of said seed key and said predetermined terminal identifier for said terminals;
d. encrypting said new dynamic key in said host computer using said dynamic key previously generated by said host computer;
e. transmitting said encrypted new dynamic key from said host computer to said terminal;
f. decrypting said new dynamic key at said terminal using said dynamic key previously generated by said host currently stored in said terminal.

US-A-4816651 (EP-A2-0 284 133) discloses a process for simultaneously reading and certifying, useing a processing device, an information present at an address in a memory of an electronic medium, in particular a removable and portable medium such as a memory card. The process uses a random number, generated in the processing device, as an encoding key for the address and the information read. Thus the information is certified if the sent address and the received address are identical. Preferably the encoding algorithm is the DES.

WO88/01818 discloses an automated transaction system employing a user card (10) maintaining an account balance and a transaction terminal (20) for dispensing an article of value and debiting the card's balance. The card (10) has a secure, resident microprocessor (60) which executes an interactive handshake recognition procedure with a secure, resident microprocessor (30, 41) in the value dispensing section of the terminal (20) prior to carrying out a requested transaction. In the preferred form, the handshake procedure operates by an exchange of encrypted words between the card microprocessor (10) and the dispenser microprocessor (36, 41) using corresponding encryption algorithms and a secret key number. The system is applied as a postage metering terminal (20) having a postmark printer (40) as the value dispensing section. Against this background the present invention provides a cipher communication method for communicating transaction data between

a first electronic device which includes a first converting means for scrambling transaction data Mi into a enciphered data Mi' according to a prescribed encipher function E, and
a second electronic device which includes a second converting means for descrambling the ciphered data Mi' to a deciphered data Mi' according to a decipher function D inverse to the encipher function E,

CHARACTERIZED IN THAT the method comprising the steps of:

a first step at the first electronic device using the first converting means to scramble the transaction data Mi to the ciphered data Mi' to be transferred to the second electronic device, according to the prescribed encipher function E;
a second step for transferring the enciphered transaction data Mi', from the first electronic device to the second electronic device;

a third step at the second electronic device using the second converting means to descramble the enciphered transaction data Mi' transferred by the second step from the first electronic device to the deciphered data Mi, according to the decipher function D:

a fourth step at the second electronic device using the second converting means to scramble another transaction data MJ to another ciphered data Mj' to be transferred to the first electronic device, according to the decipher function D:

a fifth step for transferring the enciphered transaction data Mj', from the second electronic device to the first electronic device: and

a sixth step at the first electronic device using the first converting means to descramble the enciphered transaction data MJ' transferred by the sixth step from the second electronic device to the deciphered data Mj, according to the decipher function E.

For a better understanding of the present invention and many of the attendant advantages thereof reference will be made by way of example to the accompanying drawings, wherein:

FIGURE 1 is a diagram showing data communications between the host computer and the terminal equipment when they have two sets of data converters (Case I);

FIGURE 2 is a diagram showing data communications between the host computer and the terminal equipment when they have one set of data converters (Case II);

FIGURE 3 is a diagram showing data communications among the host computer, the terminal equipment and the portable electronic apparatus, e.g., the IC card when the host computer and the IC card have two sets of data converters (Case III);

FIGURE 4 is a diagram showing data communications among the host computer, the terminal equipment and the IC card when the host computer and the IC card have one set of data converters (Case IV);

FIGURE 5 is a diagram showing data communications among the host computer, the terminal equipment and the IC card when transaction key data restored and retained in the terminal equipment in Case III is changed to be retained in the IC card (Case V);

FIGURE 6 is a diagram showing data communications among the host computer, the terminal equipment and the IC card when transaction key data restored and retained in the terminal equipment in Case IV is changed to be retained in the IC card (Case VI);

FIGURE 7 is a block diagram of a system including the host computer and the terminal equipment which have two sets of data converters;

FIGURE 8 is a block diagram of the system including the host computer and the terminal equipment which have one set of data converters;

FIGURE 9 is a block diagram of the system including the host computer, the terminal equipment and the IC card and of which the host computer and the IC card have two sets of data converters;

FIGURE 10 is a block diagram of the system including the host computer, the terminal equipment and the IC card and of which the host computer and the IC card have one set of data converters;

FIGURES 11A, 11B and 11C are diagrams showing a memory map of the IC card;

FIGURES 12A and 12B are diagrams showing data configurations of a command A and its response a;

FIGURES 13A and 13B are diagrams showing data configurations of a command B and its response b;

FIGURES 14A and 14B are diagrams showing data configurations of a command C and its response c;

FIGURES 15A and 15B are diagrams showing data configurations of a command D and its response d;

FIGURES 16A and 16B are diagrams showing data configurations of a command E and its response e;

FIGURES 17A and 17B are diagrams showing data configurations of a command F and its response f;

FIGURES 18A and 18B are diagrams showing data configurations of a command G and its response g;

FIGURE 19 is a flow chart showing a communication process performed by using the command A and the response a;

FIGURE 20 is a flow chart showing a communication process by using the command B and the response b;

FIGURE 21 is a flow chart showing a communication process by using the command C and the response c;

FIGURE 22 is a flow chart showing a communication process by using the command D and the response d;

FIGURE 23 is a flow chart showing a communication process by using the command E and the response e;

FIGURE 24 is a flow chart showing a communication process by using the command F and the response f;

FIGURE 25 is a block diagram of a system including the host computer, the terminal equipment and the IC card and of which the host computer and the IC card have two sets of data converters and a random number generator; and

FIGURE 26 is a block diagram of a modification of the system of FIGURE 25.

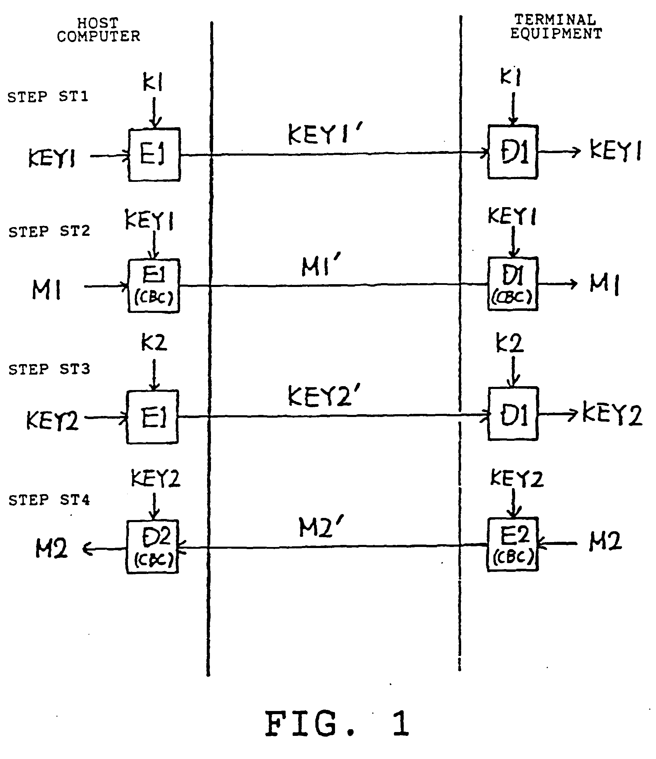

The present invention will be described in detail with reference to the FIGURES 1 through 26. Throughout the drawings, like or equivalent reference numerals or letters will be used to designate like or equivalent elements for simplicity of explanation.

An embodiment of the present invention will be described in detail hereinafter referring to the attached drawings.

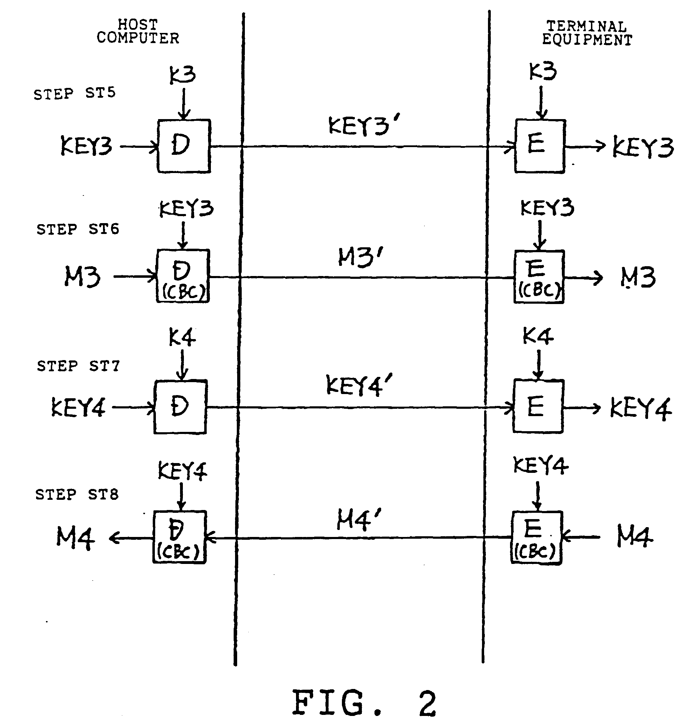

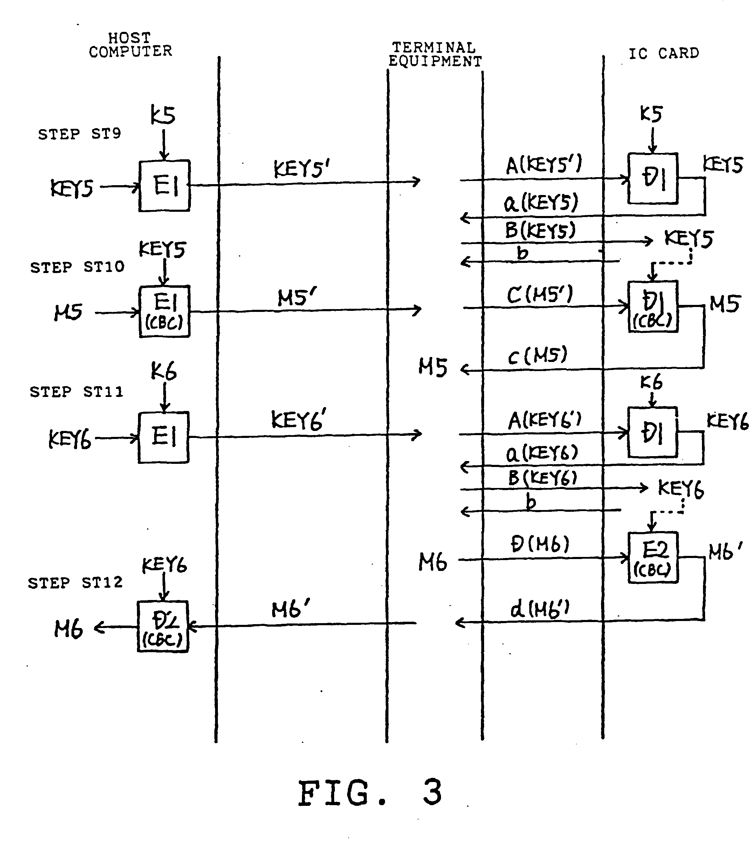

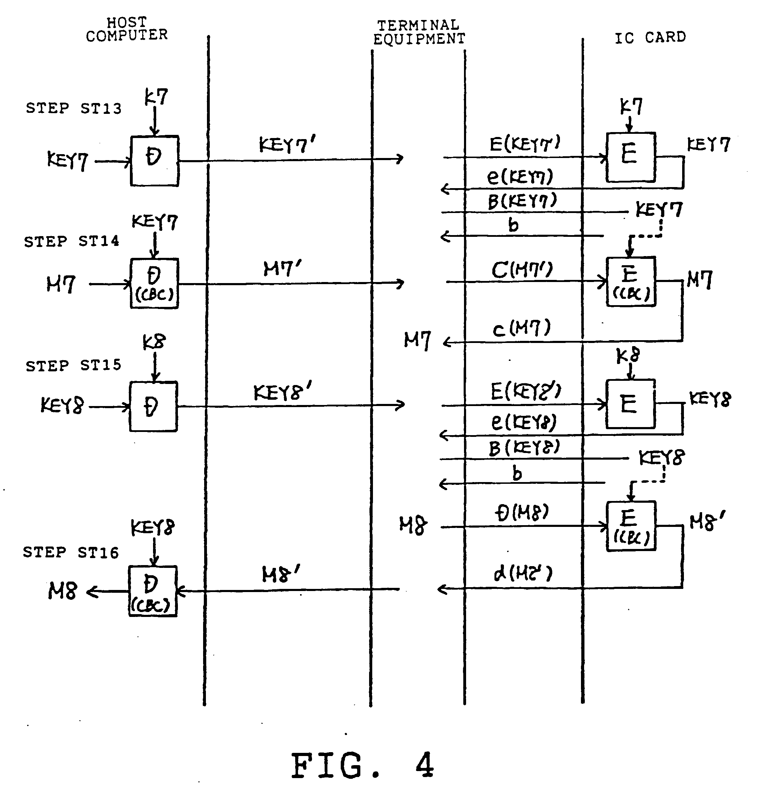

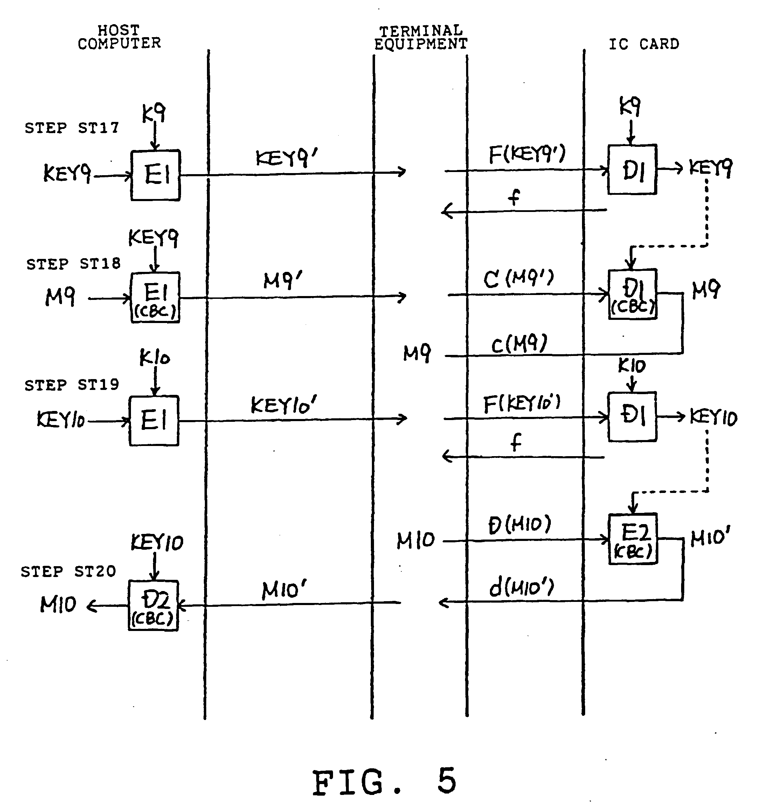

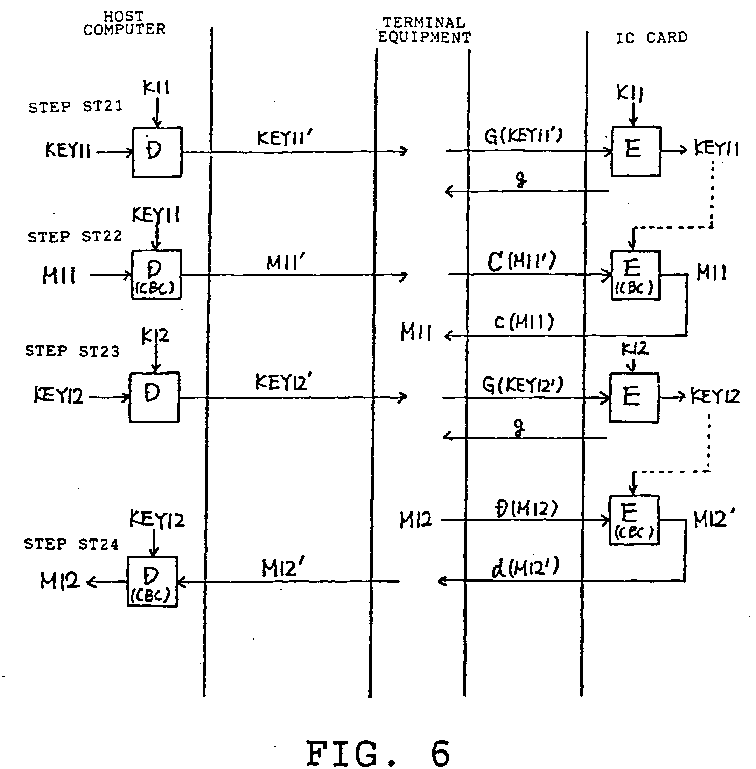

First, the flow charts showing the flow of processes of the data communication system of this embodiment are shown in FIGURES 1 through 6. FIGURE 1 shows data communications between a host computer and a terminal equipment, e.g., a customer terminal, in a first case where the host computer and the terminal equipment, having two sets of data converters, perform the data conversion using a different set of data converters in the data transmission and the data receiving (hereinafter referred to as Case I). FIGURE 2 shows also data communications between the host computer and the terminal equipment in a second case where the host computer and the terminal equipment, having one set of the data converters, perform the data conversion using the same data converter in both the data transmission and the data receiving (hereinafter referred to as Case II). FIGURE 3 shows the flow of the data communication between the host computer and the terminal equipment in the case where the data conversion process that was performed by the terminal equipment in Case I is left to an IC card inserted in the terminal equipment (hereinafter referred to as Case III). FIGURE 4 shows the flow of the data communication between the host computer and the terminal equipment in the case where the data conversion process that was performed by the terminal equipment in Case II is left to an IC card inserted in the terminal equipment (hereinafter referred to as Case IV). FIGURE 5 shows the flow of the data communication between the host computer and the terminal equipment in the case where the transaction key restored in the IC card and held in the terminal equipment in FIGURE 3 was changed to be held in the IC card (hereinafter referred to as Case V). And FIGURE 6 shows the flow of the data communication between the host computer and the terminal equipment in the case where the transaction key restored in the IC card and held in the terminal equipment was changed to be held in the IC card (hereinafter referred to as Case VI). The data conversion referred to here means data enciphering/deciphering.

KEYn (n represents a positive integer) in FIGURES 1 through 6 is a transaction key data that is used for the conversion process of data to be communicated in the data (message) transaction. Further, Kn in FIGURES 1 through 6 is a key data owned mutually between the host computer and the terminal equipment (Cases I and II) and between the host computer and the terminal equipment (Cases I through VI) and used for converting the transaction key data KEYn itself. That is, assuming that the transaction key scramble processing function to scramble the transaction key data KEYn to be used for the data conversion is f and the function which is used to restore the transaction key data KEYn' that was scrambled by this function f is f',

$$KEYn' = f\, Kn\, (KEYn)$$

$$KEYn = f'Kn\, (KEYn')$$

Further, assuming that the data scramble processing function to scramble a message Mn as data to be communicated is F and the function to restore a message Mn' which is scrambled by this function F is F',

$$Mn' = F\, KEYn\, (Mn)$$

$$Mn = F'KEYN\, (Mn')$$

Here, the relation between the functions f and f' and that between the functions F and F' are equivalent to the relation between the data converting functions E1 and D1, that between the data converting functions E2 and D2, and that between the data converting functions E and D. These data converting functions have been incorporated in the data converters described above.

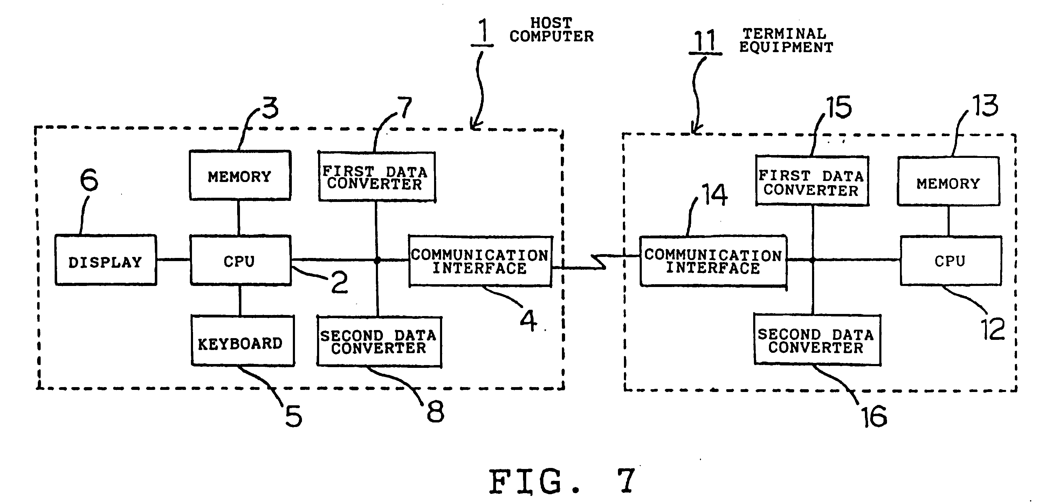

Case I shown in FIGURE 1 shows the flow of the data communication on a system including the host computer 1 and the terminal equipment 11 as shown in FIGURE 7. In FIGURE 7, the host computer 1 includes a central processing unit (CPU) 2 which controls the operation of the components of the host computer 1, a memory 3 which stores various data, a communication interface 4 which communicates with the terminal equipment 11, a keyboard 5 which is used by the user to input data, commands, etc., a display 6 including, for instance, a CRT, to display results of arithmetic operation, communicated data, etc., a first data converter 7 having the data converting function E1 and a second data converter 8 having the data converting function D2.

Further, the terminal equipment 11 includes a CPU 12 which controls the operations of components in the terminal equipment 11, a memory 13 which stores various data, a communication interface 14 which communicates with the host computer 1, a first data converter 15 having the data converting function D1 corresponding to the data converting function E1 of the data converter 7 in the host computer 1 and a second data converter 16 having the data converting function E2 corresponding to the data converting function D2 of the data converter 8.

Here, the data converted by the first data converter 7 of the host computer 1 is restored by the first data converter 15 of the host computer 1 and the data converted by the second data converter 8 of the host computer 1 is restored by the second data converter 16 of the terminal equipment 11. Inversely, the data converted by the first data converter 15 of the terminal equipment 11 can be restored by the first data converter 7 of the host computer 1 and the data converted by the second converter 16 of the terminal equipment 11 also can be restored by the second converter 8 of the host computer 1.

Now, the process to transmit the message M1 generated by the host computer 1 to the terminal equipment 11 via the communication interfaces 4 and 14 is first explained. In step ST1, the CPU 2 of the host computer 1 obtains the transaction key data KEY1' (= E1 K1 (KEY1)) through the data conversion (the data scramble) of the message deciphering key (transaction key), which is used in the first transaction, by the data converting function E1 of the first data converter 7 using the key data K1

Here, the transaction key data KEY1 and the key data K1 have been stored in the memory 3 in advance. Hereafter, the host computer 1 transmits the transaction key data KEY1' to the terminal equipment 11. Upon receipt of the transaction key data KEY1', the CPU 12 of the terminal equipment 11 converts and deciphers the transaction key data KEY1' to get the transaction key data KEY1 (= D1 K1 (KEY1')) by the data converting function D1 in the first data converter 15 provided corresponding to the first data converter 7 of the host computer 1 using the key data K1 and stores the transaction key data KEY1 in the memory 13.

Next, in the step ST2 the CPU 2 of the host computer 1 converts (enciphers) the message M1, which is generated by the CPU 2 itself, by the data converting function E1 in the data converter, for instance, in the CBC (Cipher Block Chaining) mode using the transaction key data KEY1 to get the message M1' (= E1 (CBC) KEY1 (M1)). Thereafter, the host computer 1 transmits the message M1' to the terminal equipment 11. Upon receipt of the message M1', the terminal equipment 11 performs the data conversion process to decipher the message M1' to get the message M1 (= D1 (CBC) KEY1 (M1')) by the data converting function D1 in the first data converter 15 in the CBC mode based on the transaction key data KEY1 held in the memory 13 in the step ST1. The message generated by the host computer 1 can be transmitted to the terminal equipment 11 by the process described above.

Next, the process to transmit the message generated by the terminal equipment 11 to the host computer 1 is explained. In the step ST3 the CPU 2 of the host computer 1 converts (data scramble) the transaction key data KEY2 to be used for data conversion of the message generated by the terminal equipment and transmits as the transaction key data KEY2' to the terminal equipment 11. The transaction key data KEY2 and the key data K2 referred to here have been stored in the memory 3 in advance. The terminal equipment 11 gets the transaction key data KEY2 in the same procedure as in the step ST1. In the step ST4 the CPU 12 of the terminal equipment 11 enciphers the message M2 through the data conversion process by the data converting function E2 in the second data converter 16 using the transaction key data KEY2 stored in the memory 13 in the step ST3 to get the message M2' (= E2 (CBC) KEY2 (M2)) and transmits the message M2' to the host computer 1.

Upon receipt of the message M2' from the terminal equipment 11, the host computer 1 deciphers the message M2' to get the message M2 (= D2 (CBC) KEY2 (M2')) through the data conversion process by the data converting function D2 of the second data converter 8 based on the transaction key data KEY2. The message generated by the terminal equipment 11 can be transmitted to the host computer 1 by the process described above.

In Case I described above, the key described above, the key data K1 and K2 used in the data conversion of the transaction key data KEY1 and KEY2 have been stored in advance in the memory 13 of the terminal equipment 11. The terminal equipment 11 is provided with the program to select a key data by the signal transmitted from the host computer and key data which is used by the CPU 12 is selected by this program. In the step ST1, the CPU 2 of the host computer 1 transmits a specifier to specify the key data K1 together with the transaction key data KEY1'. The CPU 12 of the terminal equipment 11 gets the key data K1 by referring to this specifier. In the step ST3, the key data K2 is obtained in the similar manner.

The key data K1 and K2 for the data conversion of the transaction key may be the same. Further, the transaction key used in the previous data communication may be used as the key data for the data conversion (enciphering/deciphering) of the transaction key to be used this time. That is, in the above Case I, the transaction key data KEY1 in the step ST1 may be used as the key data K2 in the step ST3.

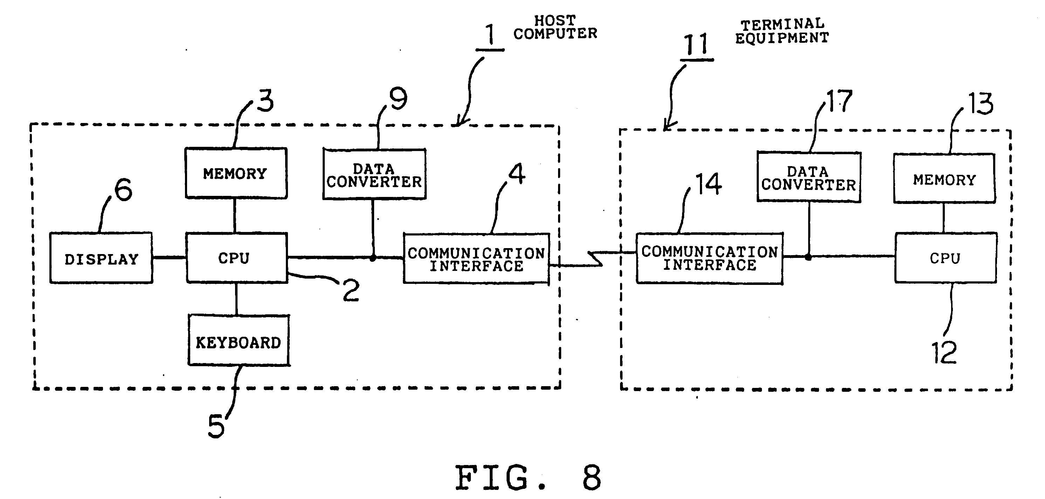

Case II shown in FIGURE 2 shows the flow of the data communication on a system including the host computer 1 and the terminal equipment 11 as shown in FIGURE 8. In FIGURE 8, the host computer 1 and the terminal equipment 11 are provided with the data converters 9 and 17 having the mutually corresponding data converting functions, and the data converted by the data converter 9 of the host computer 1 is restored by the data converter 17 of the terminal equipment 11 and the data converted by the data converter 17 is restored by the data converter 9 of the host computer 1. The explanation of the system configuration of Case II (see FIGURE 7) is omitted here as it is almost the same as that of the system in Case I, above.

Each of the data converters 9 and 17 operates as either of an encipher and a decipher. That is, the data converters 9 and 17 can be called as an encipher/decipher or a decipher/encipher. An encipher function E and a decipher function D are generally related to each other with an inverse relation between them. The encipher function E and the decipher function D satisfy conditions given in following equations in the CBC mode.

$$E(CBC) \, KEYi \, (Mi) = Mi'$$

$$D(CBC) \, KEYi \, (Mi')$$

$$= D(CBC) \, KEYi \, (E(CBC) \, KEYi \, (Mi)) = Mi$$

When the functions E and D are inversely operated, the same results are obtained as shown by following equations.

$$D(CBC) \, KEYj \, (Mj) = Mj'$$

$$E(CBC) \, KEYj \, (Mj')$$

$$= E(CBC) \, KEYj \, (D(CBC) \, KEYj \, (Mj)) = Mj$$

As being easily understood from the above description, the data converters 9 and 17 are able to operate either of the encipher and the decipher without specific programs or hardwares.

Now, the process to transmit the message generated by the host computer 1 to the terminal equipment is first explained. In the step ST5, the CPU 2 of the host computer 1 gets the transaction key data KEY3' (= DK3 (KEY)) through the data conversion (the data scramble) of the transaction key data KEY3 by the data converting function D in the data converter 9 based on the key data K3 and transmits the transaction key data KEY3' to the terminal equipment 11. The transaction key data KEY3 and the key data K1 referred to here have been stored in the memory 3 in advance. Upon receipt of the transaction key data KEY3', the CPU 12 of the terminal equipment 11 converts (deciphers) the transaction key data KEY3' by the data converting function E in the data converter 17 using the key data K3 as the-key to get the transaction key data KEY3 (= KEY3') and stores it in the memory 13.

Then, in the step ST6 the CPU 2 of the host computer 1 converts (enciphers) the message M3 that was generated by the CPU 2 itself using the data converting function D in the data converter 9 based on the transaction key data KEY3 to get M3' (= D (CBC) KEY3 (M3)) and transmits the message M3' to the terminal equipment 11.

Upon receipt of the message M3', the CPU 12 of the terminal equipment 11 restores the message M3' by the data converting function E in the data converter 17 based on the transaction key data KEY3 that has been stored in the step ST5 and gets a message M3 (= E (CBC) KEY3 (M3')). The message generated by the host computer 1 can be transmitted to the terminal equipment 11 by the process described above.

Next, the process to transmit a message generated by the terminal equipment 11 to the host computer 1 is explained. First, in the step ST7 the CPU 2 of the host computer 1 transmits the transaction key data KEY4 which is to be used in the next step ST8 to the terminal equipment 11 using the key data K4 in the same procedure as in the above step ST5. The transaction key data KEY4 and the key data K4 referred to here have been stored in the memory 3 in advance.

Then, in the step ST8 the CPU 12 of the terminal equipment 11 converts (enciphers) the message M4 generated by itself by the data converting function E in the data converter 17 based on the transaction key data KEY4 which has been stored in the step ST7 to get a message M4' (= E (CBC) KEY4 (M4)) and transmits the message M4' to the host computer 1. Upon receipt of the message M4', the host computer 1 deciphers the message M4' through the data conversion using the data converting function D of the data converter 9 based on the transaction key data KEY4 to get a message M4 (= D (CBC) KEY4 (M4')) and thus, the message M4 generated by the terminal equipment 11 can be transmitted to the host computer 1.

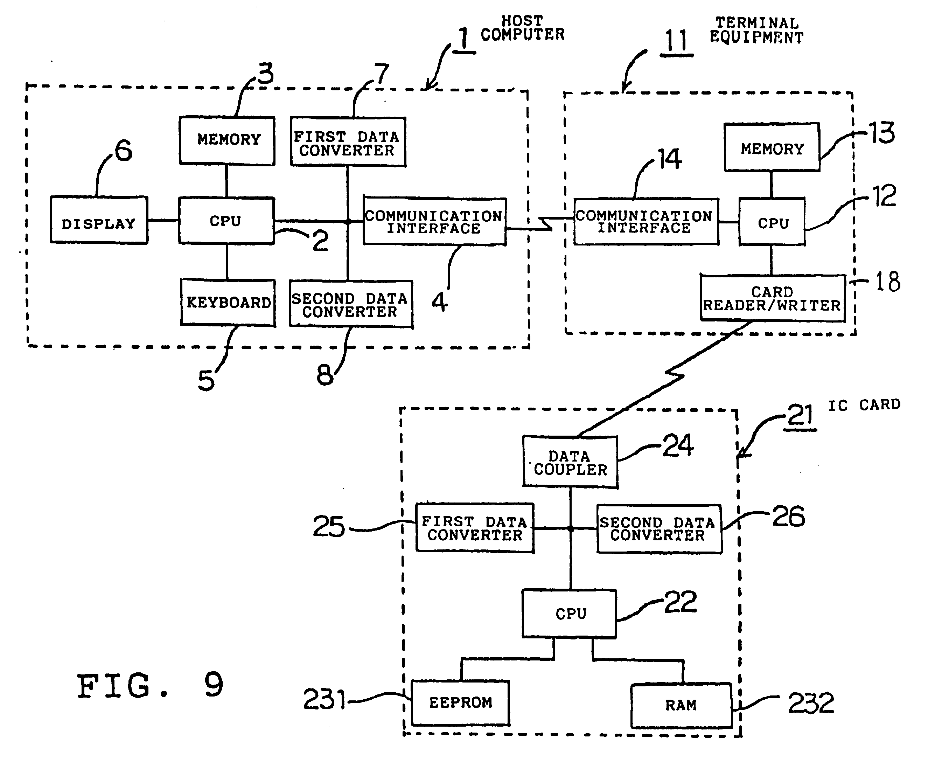

Case III shown in FIGURE 3 shows the flow of the data communication on a system including the host computer 1, the terminal equipment 11 and the IC card 21 as shown in FIGURE 9 in a case where the data conversion process (the enciphering/deciphering process) which was performed by the terminal equipment 11 in Case I is entrusted to the IC card 21 inserted in the terminal equipment 11.

The host computer 1, in this case, includes the CPU 2 which controls the operations of the components, the memory 3 which stores various information, the communication interface 4 which communicates with the terminal equipment, the keyboard 5 which is used by user for inputing data, commands, etc., the display 6 which is composed of, for instance, a CRT to display results of operations, communicated information, etc., the first data converter 7 having the data converting function E1 and the second converter 8 having the data converting function D2.

Further, the terminal equipment 11 includes the CPU 12 which controls the operations of the component of the terminal equipment 11, the memory 13 which stores various information, the communication interface 14 which communicates with the host computer 1 and a card reader/writer 18 which reads/writes data to/from the IC card 21.

The IC card 21 includes the CPU 22 to control the operation of the components of the IC card, the non-volatile memory 231 such as an EEPROM to store key data and various information (hereinafter referred to as EEPROM), the volatile memory 232 such as a RAM, etc. to store the transaction key (hereinafter referred to as RAM), a data coupler 24 to electrically connect with the card reader/writer 18 of the terminal equipment 11, the first data converter 25 having the data converting function D1 corresponding to the data converting function E1 of the data converter 7 of the host computer, and the second data converter 26 having the data converting function E2 corresponding to the data converting function D2 of the data converter of the host equipment 1.

Here, the data converted by, for instance, the first data converter 7 of the host computer 1 is restored by the first data converter 25 of the IC card 21 and the data converted by the second data converter 8 of the host computer 1 is restored by the second data converter 26 of the IC card 21.

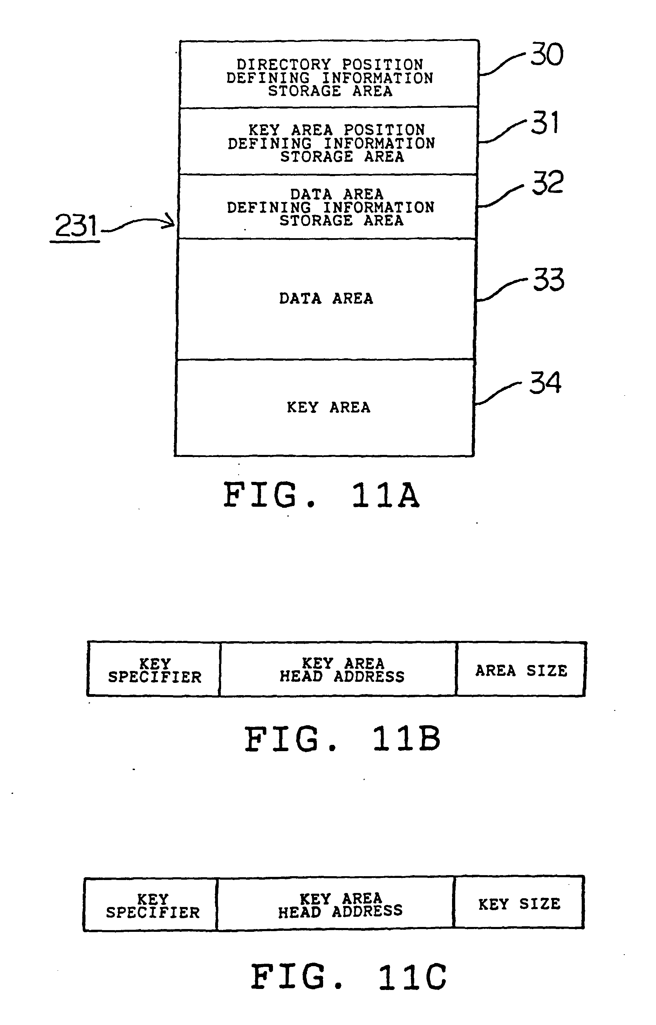

Inversely, the data converted by the first data converter 25 of the IC card 21 can be restored by the first data converter 7 of the host computer 1 and the data converted by the second data converter 26 of the IC card 21 can be restored by the second data converter 8 of the host computer 1. Now, the state inside the EEPROM 231 of the IC card 21 is explained referring to the memory map shown in FIGURE 11A.

The EEPROM 231 is divided into five sections, i.e., a directory position defining information storage area 30, a key area position defining information storage area (key area directory) 31, a data area defining information storage area (data area directory) 32, a data area 33, and a key area 34. In the directory position defining information storage area 30, the position of the key area directory 31 and that of the data area directory 32 are stored.

In the key area directory 31, one or more key area position defining information as seen in FIGURE 11B are stored. This key area position defining information includes the key specifier, key area head address and key size. When the specifier is specified by a command described later, the key area head address and key size are recognized.

Further, in the data area directory 32, one or more data area position defining information as seen in FIGURE 11C are stored. The data area position defining information includes the area specifier, area head address and area size and is used in the same manner as the key area directory described above. Further, such data as messages, etc. are stored in the data area 33 and key data are stored in the key area 34.

Here, the process to transmit a message generated by the host computer 1 to the terminal equipment 11 is explained. First, in the step ST9 the CPU 2 of the host computer 1 converts the transaction key data KEY5 (data scramble) by the data converting function E1 of the first data converter 7 based on the key data K5 to get a transaction key data KEY5' (= E1 K5 (KEY5)) and transmits it to the terminal equipment 11.

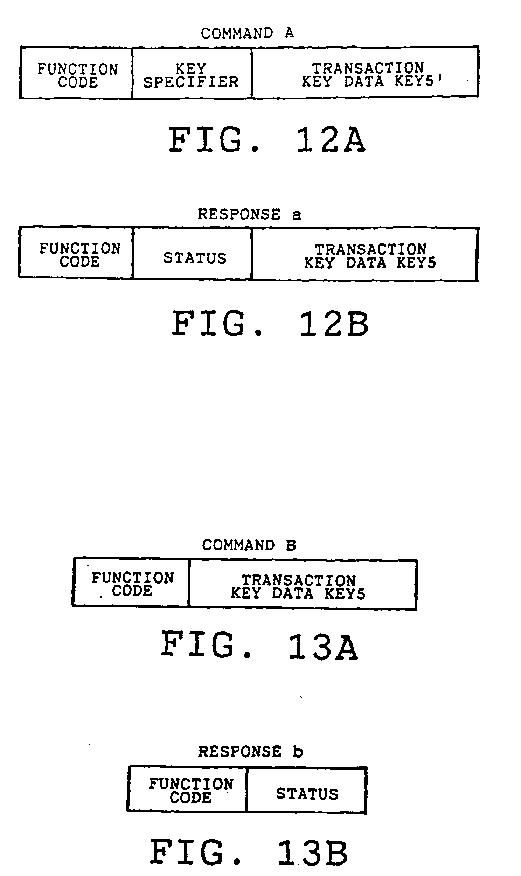

The transaction key data KEY5 and K5 referred to here have been stored in the memory 3 in advance. Upon receipt of the transaction key data KEY5' the CPU 12 of the terminal equipment 11 transmits a command A having a format as shown in FIGURE 12A to the CPU 22 of the IC card 21. This command A includes a function code to direct the operation to decipher the transmitted enciphered transaction key, the specifier to specify the key data to be used when performing the data conversion in the IC card 21 and the transaction key data KEY5' transmitted to the terminal equipment 11 previously from the host computer 1.

Upon receipt of the command A, the CPU 22 of the IC card 21, judging the transmission of the transaction key from the function code, finds out the key data K5 specified the above specifier from the EEPROM 231 and gets a transaction key data KEY5 (= DK5 (KEY5')) by performing the data conversion (deciphering) by the data converting function D1 in the first data converter 25 using the specified key data K5, and transmits a response a to the command A, which has a format as shown in FIGURE 12B to the CPU 12 of the terminal equipment 11. The response a includes the function code, the status showing the normal completion, and the transaction key data KEY5 obtained through the deciphering by the data conversion process.

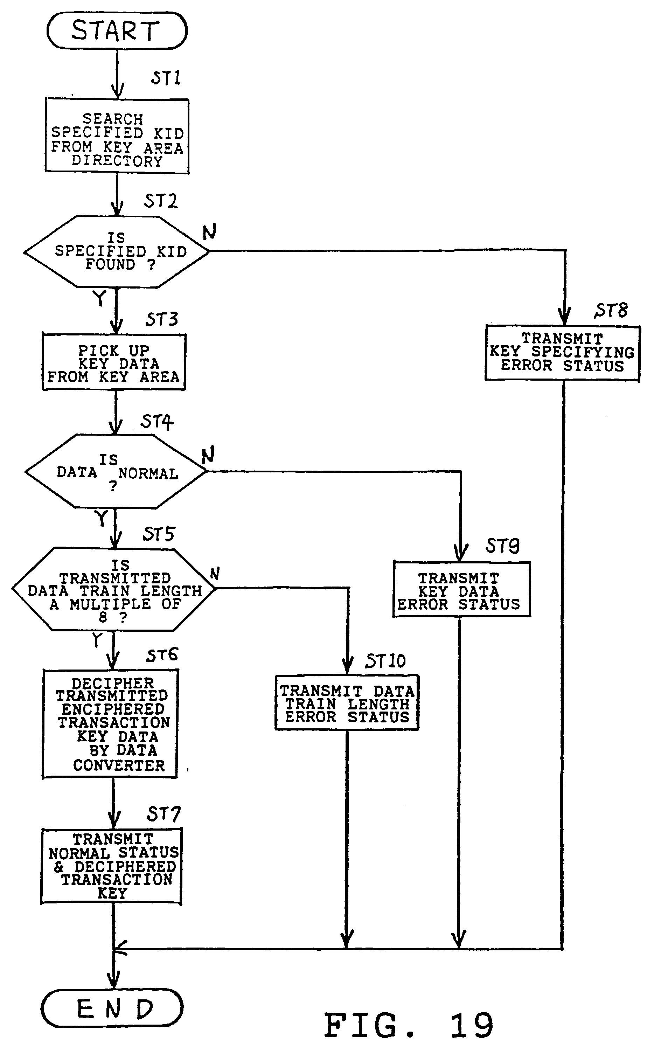

Now, the flow of the process operation of the CPU 22 of the IC card 21 using the command A and the response a in the communication between the terminal equipment 11 and the IC card 21 is explained referring to FIGURE 19. First, when the command A is transmitted to the IC card 21 from the terminal equipment 11, the CPU 22 of the IC card 21 judges the transmission of a KID (Key Data No.) of the key specifier of the command A from the key area directory 31 of the EEPROM 231 (step ST1).

Then, the CPU 22 judges if the specified KID has been found (step ST2). When the KID has been found, it picks up the key data corresponding to the KID from the key area 33 of the memory 23 (step ST3). If the specified KID was not found in the above step ST2, the key specification error status is output as the response a (step ST8) and the process is terminated. After picking up the key data from the key area in step ST3, the key data is judged if it has any abnormality (step ST4).

When no abnormality has been found in the data picked up, it is judged if the data train length of the enciphered transaction key data transmitted by the command A is a multiple of 8 (step ST5). If no abnormality is in the data train length, after the data conversion (enciphering) by the data converter 25 using the key data that picked up the data train (KEY5') transmitted from the terminal equipment by the command A (step ST6), the normal end status and the deciphered data train (KEY5) are transmitted to the terminal equipment 11 as the response a (step ST7) and the process is terminated.

If there is any abnormality in the key data in the above step ST4, the key data error status is output as the response a (step ST9) and the process is terminated. Further, when the data train length of the data transmitted is not a multiple of 8, the data train length error status is output as the response a (step ST10) and the process is terminated.

Next, the CPU 12 of the terminal equipment 11 transmits a command B which has a format as shown in FIGURE 13A to the CPU 22 of the IC card 21. This command B includes a function code which directs the operation to store the transmitted transaction key in the RAM 232 and the transaction key data KEY5 which has been transmitted previously to the terminal equipment 11 to the IC card 21. Upon receipt of this command B, the CPU 22 of the IC card 21 stores the transaction key data KEY5 transmitted by the command B in the RAM 232.

Thereafter, the CPU 22 of the IC card 21 transmits a response b which has a format as shown in FIGURE 13B. This response b includes the function code showing the response to the command B and the status showing the normal completion. At this time, the CPU 12 of the terminal equipment 11, after transmitting the command B to the IC card 21 again, erases the transaction key data KEY5 previously received from the IC card 21 and stored in the memory 13.

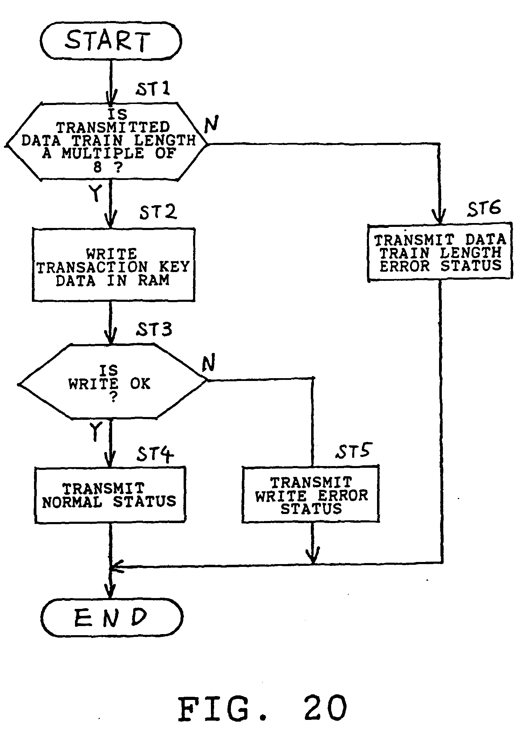

Now, the flow of process operation of the CPU 22 of the IC card 21 in the communication between the terminal equipment 11 and the IC card 21 using the command B and the response b is explained referring to FIGURE 20. When the command B is transmitted from the terminal equipment 11, this transmitted data train (KEY5) length is checked if it is a multiple of 8 (step ST1). When the data train length is a multiple of 8, the CPU 22 of the IC card 21 writes the data train (KEY5) in the specified area of the RAM 232 (step ST2).

Then, it is checked whether the transaction key data (KEY5) has been properly written (step ST3). When the data has been properly written, the normally completed status is output to the terminal equipment 11 as the response b (step ST4) and the process is terminated. If the data was not properly written in step ST2, the write error status is output as the response b (step ST5) and the process is terminated. If the input data length in step ST1 was not a multiple of 8, the data train length error status is output as the response b and the process is terminated (step ST6).

Next, in the step ST10 the CPU 2 of the host computer 1 performs the data conversion (enciphering) of the message M5, which has been generated by the CPU 2 itself, to get a message M5' (= E1 (CBC) KEY5 (M5)) by the data converting function E1 in the first data converter 7 in the CBC mode based on the transaction key data KEY5 and transmits the message M5' to the terminal equipment 11.

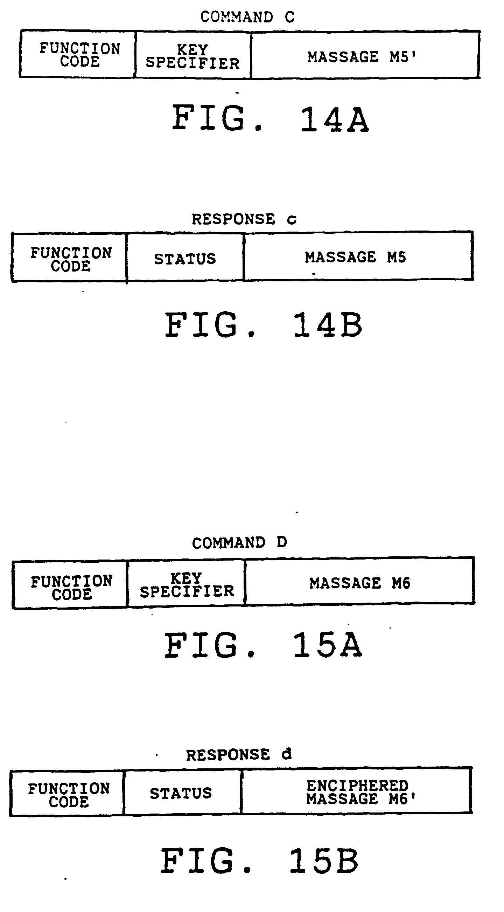

Upon receipt of the message M5', the CPU 12 of the terminal equipment 11 transmits it to the IC card 21 using a command C which has a format as shown in FIGURE 14A. The command C includes a function code to direct the deciphering operation of the transmitted enciphered message, the specifier to specify the key data to be used in the IC card 21 in the data conversion process, and the message M5' which has previously transmitted to the terminal equipment 11 from the host computer 1. In the example shown in FIGURE 3, the transaction key (KEY5) stored in the RAM 232 is specified by the command B.

Now, upon receipt of the command C, the CPU 22 of the IC card 21 deciphers the message M5' by the data converting function D1 in the first data converter 25 using the key data KEY5 sepcified by the specifier described above to get a message M5 (D = E1 (CBC) KEY5 (M5')) and as the response to the command C, transmits a response c having a format as shown in FIGURE 14B to the CPU 12 of the terminal equipment 11. The response c includes a function code showing the response to the command C, the status showing the normal completion, and the message M5 which has been deciphered and obtained by the data conversion process. Now, the terminal equipment 11 is able to receive the message from the host computer 1.

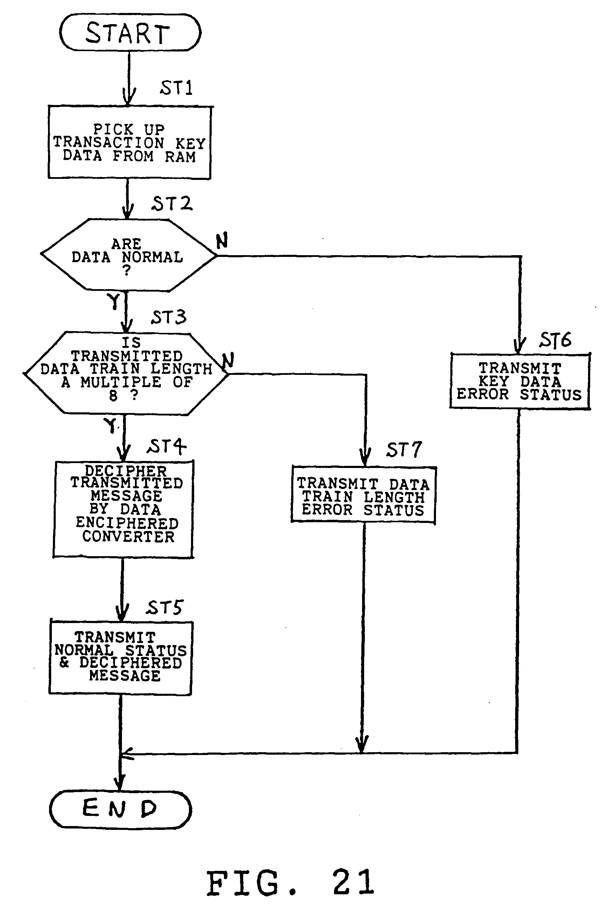

Next, the flow of the process operation of the CPU 22 of the IC card 21 in the communication using the command C and the response c between the terminal equipment 11 and the IC card 21 is explained referring to FIGURE 21.

First, when the command C is transmitted from the terminal equipment 11, the CPU 22 of the IC card 21 picks up the key data (in this case, the transaction key data KEY5 transmitted by the command B immediately before) specified by this command C from the RAM 232 (step ST1). After picking up the transaction key data, the CPU 22 judges if this key data has any abnormality (step ST2). When no abnormality is picked up in the key data, the CPU 22 checks if the data train length of the data transmitted from the terminal equipment by the command C is a multiple of 8 (step ST3).

When the data train length is a multiple of 8, using the transaction key data KEY5 picked up in the above, the CPU 22 deciphers this data train (M5') by performing the data conversion by the first data converter 25 (step ST4) and outputs the normal completion status as the response c and the deciphered data train (M5) to the terminal equipment 11 (step ST5) and terminates the process.

Further, when an abnormality was found in the key data in the above step ST2, the data error status is output as the response c to the terminal equipment (step ST6) and the process is terminated. Further, when the data train length was not a multiple of 8 in the above step ST3, the data train length error status is output as the response c to the terminal equipment 11 (step ST7) and the process is terminated.

Next, the process to transmit a message generated in the terminal equipment to the host computer 1 is explained. First in the step ST11, the CPU 2 of the host computer 1 transmits the transaction key data KEY6 to be used by the IC card 21 in the next step ST12 to the terminal equipment 11 in the same procedures as in the above step ST9. The transaction key data KEY6 and the key data K6 have been stored in the memory 3 in advance. The explanation of the data communication process between the terminal equipment 11 and the IC card 21 using the command A, response a and the command B, response b is omitted as it has been already provided in the above step ST9. Upon receipt of the command B, the CPU 22 of the IC card 21 stores the transaction key data KEY6 transmitted by the command B in the RAM 232.

Next, in the step ST12 the CPU 12 of the terminal equipment transmits the message M6 that has been generated by the CPU 12 itself to the card 21 using a command D in a format as seen in FIGURE 15A. The command D includes a function code which directs the enciphering of the transmitted message, the specifier which specifies the key data to be used for the data conversion process by the IC card 21 and the message M6. In the example shown in FIGURE 3, the specifier specifies the transaction key data KEY6 which has been transmitted and stored in the RAM 232 by the command B in the step ST11.

Upon receipt of the command D, the CPU 22 of the IC card 21 performs the data conversion by the data converting function E2 in the second data converter 26 using the key data KEY6 specified by the specifier to encipher the message M6 and to get a message M6' (= M2 (CBC) KEY6 (M6)) and transmits a response d having a format as shown in FIGURE 15B to the CPU 12 of the terminal equipment 11 as the response to the command D. The response d includes a function code showing the response to the command D, the status showing the normal completion and the enciphered message M6' obtained through the data conversion.

Upon receipt of the response d from the IC card 21, the CPU 12 of the terminal equipment 11 transmits the enciphered message M6' to the host computer 1. Upon receipt of the enciphered message M6', the CPU 2 of the host computer 1 enciphers the message M6' to get the message M6 (= D2 (CBC) KEY6 (M6')) by performing the data conversion by the data converting function D2 in the second data converter 8 using the transaction key data KEY6. The host computer 1 is able to receive the message from the terminal equipment 11 according to the procedure described above.

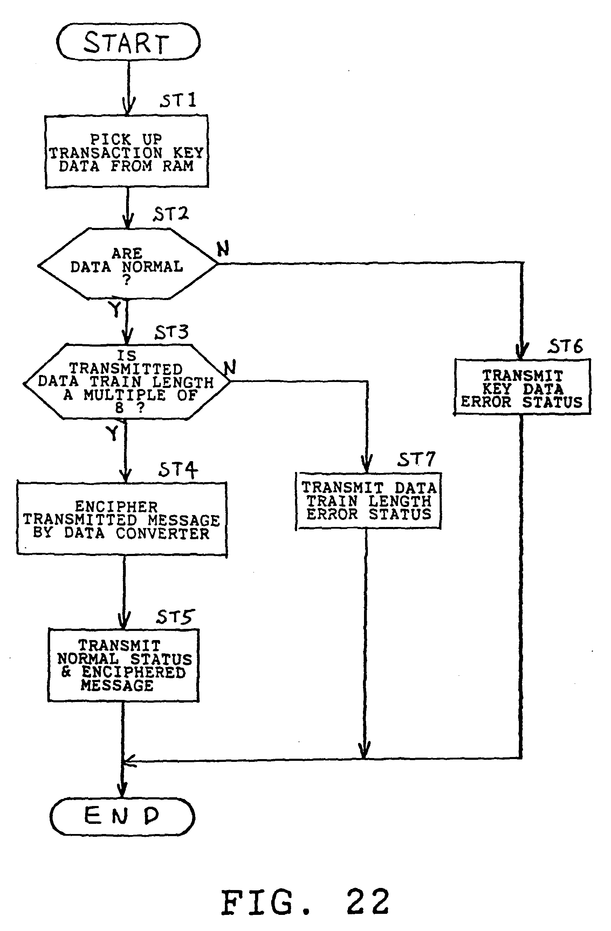

Now, the operation of the CPU 22 of the IC card 21 in the communication between the terminal equipment 11 and the IC card 21 using the command D and the response d is explained referring to FIGURE 22.

First, when the command D is transmitted from the terminal equipment 11, the CPU 22 of the IC card 21 picks up the transaction key data KEY6 specified by the key specifier of this command D from the RAM 232 (step ST1). After picking up the transaction key data from the RAM 232, the CPU 22 judges if this transaction key data has abnormality in step ST1 (step ST2). If no abnormality is found in the picked up transaction key data, the CPU 22 judges whether the data train length (M6) transmitted from the terminal equipment 11 by the command D is a multiple of 8 (step ST3).

When the data train length is judged to be a multiple of 8, after enciphering the message M6 by performing the data conversion by the data converter using the picked up the transaction key data KEY6 (step ST4), the CPU 22 outputs the normal completion status and the enciphered data train (M6') to the terminal equipment 11 as the response d (step ST5) and terminates the process. If any abnormality was found in the key data in the above step ST2, the data error status is output as the response 1 (step ST6) and the process is terminated. Further, if the data train length was found to be not proper in the above step ST3, the data train length error status is output (step ST7) and the process is terminated.

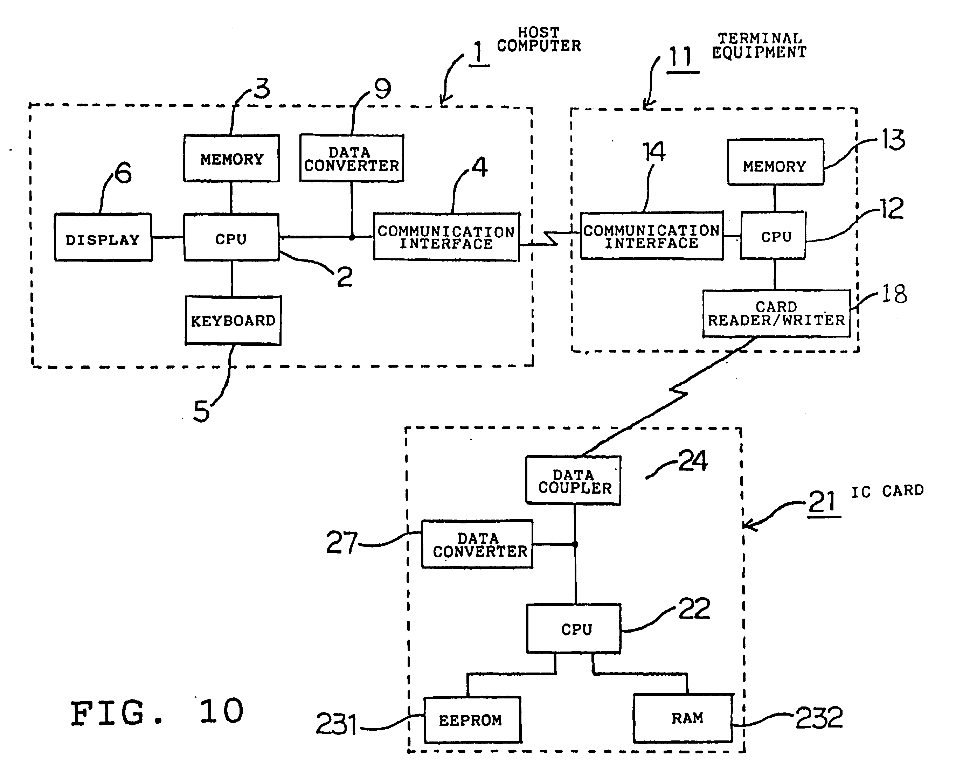

Next, Case IV shown in FIGURE 4 shows the data communication in a case where, on the system including the host computer 1, the terminal equipment 11 and the IC card 21 as shown in FIGURE 10, the data conversion process which, was performed by the terminal equipment 11 in Case II is entrusted to the IC card 21 which is inserted in the terminal equipment 11.

First, the process to transmit a message generated by the host computer 1 to the terminal equipment 11 is explained. First, in the step ST13, the host computer 1 and the IC card 21 have the data converters 9 and 27, respectively, which have the mutually corresponding data converting functions and the flow of the data communication in a case where the data converted by the data converter 9 of the host computer 1 is restored by the data converter 27 of the IC card 21 and the data converted by the data converter 27 of the IC card 21 is restored by the data converter 9 of the host computer 1 is shown. Here, the system configuration of Case IV is omitted as it is almost the same as the system (see FIGURE 9) shown in Case III.

Now, the process to transmit a message generated by the host computer 1 to the terminal equipment 11 is first explained. In the step ST13, the CPU 2 of the host computer performs the data conversion (the data scramble) of the transaction key data KEY7 by the data converting function D of the first data converter based on the key data K7 to get a transaction key data KEY7' (= DK7 (KEY7)) and transmits this transaction key data KEY7' to the terminal equipment 11. The transaction key data KEY7 and the key data K7 have been stored in the memory 3 in advance.

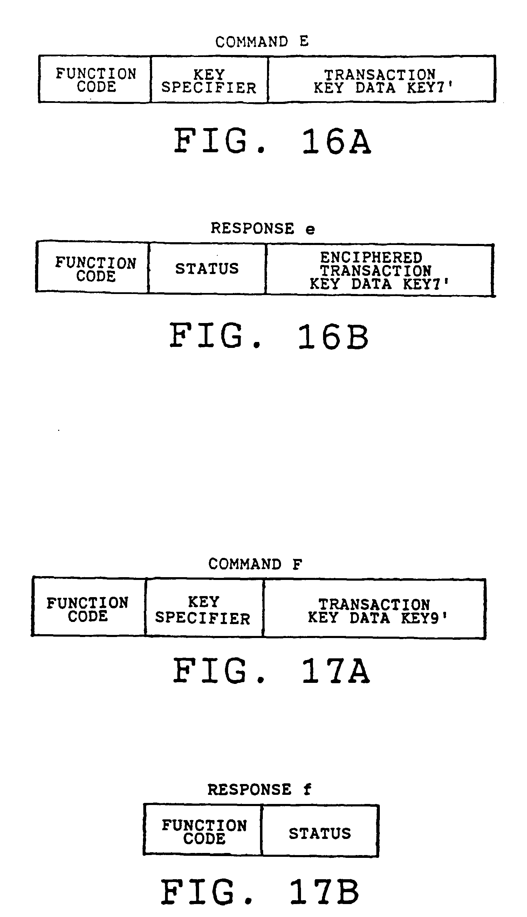

Upon receipt of the transaction key data KEY7', the CPU 12 of the terminal equipment 11 transmits a command E having a format as shown in FIGURE 16A to the CPU 22 of the IC card 21. Here, the command E includes a function code which directs the deciphering operation of the received enciphered transaction key, the specifier which specifies the key data to be used for the data conversion process by the IC card 21, and the transaction key data KEY7' transmitted to the terminal equipment 11 from the host computer 1.

Now, upon receipt of the command E, the CPU 22 of the IC card 21 deciphers the transaction key data KEY7' to get a transaction key data KEY7 (= DK7 (KEY7')) by performing the data converting function E of the data converter 27 based on the key data K7 specified by the specifier, and transmits a response e having a format as shown in FIGURE 16B to the CPU 12 of the terminal equipment 11. Here, the response e includes a function code showing the response to the command E, the status showing the normal completion and the deciphered transaction key data KEY7' obtained by the data conversion.

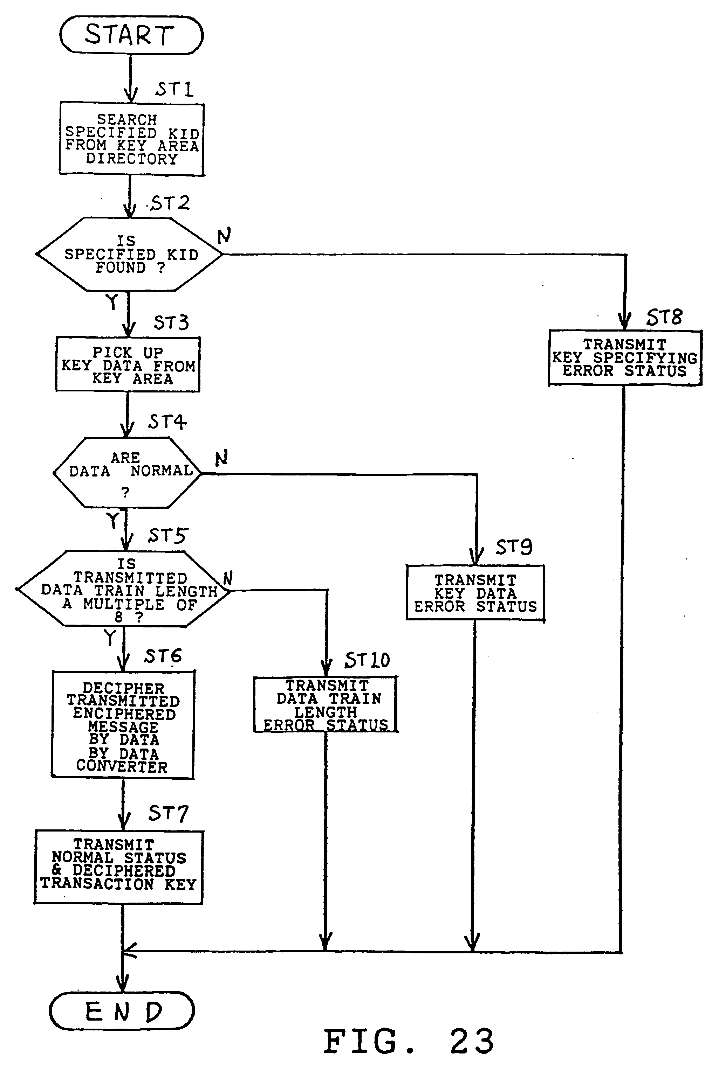

Then, the operation of the CPU 22 of the IC card 21 in the communication between the terminal equipment 11 and the IC card 21 using the command E and the response e is explained hereinafter referring to FIGURE 23.

First, when the command E is transmitted from the terminal equipment 11, the CPU 22 of the IC card 21 retrieves the KID (Key Data No.) which is the value of the key specifier of the command E from the key area directory 31 in the EEPROM 231 (step ST1). Then, the CPU 22 judges if the specified KID is found (step ST2) and if the KID is found, picks up the key data corresponding to the KID from the key area 33 in the EEPROM 231 (step ST3). If the specified KID was not found in the above step ST2, the key specification error status is output as the response e and the process is terminated.

After picking up the key data from the key area in the step ST3, the CPU 22 judges if this key data is normal (step ST4) and if no abnormality was found in the data, judges if the data train length of the received enciphered transaction key data is a multiple 8 (step ST5). If the data train length is normal, the data conversion is performed by the data converter 27 using the above picked up key data and after obtaining the transaction key data KEY7 by deciphering the data train (KEY7') transmitted from the terminal equipment 11 by the command E (step ST6), the normal completion status and the deciphered transaction key data KEY7 are output to the terminal equipment 11 as the response e (step ST7) and the process is terminated.

When any abnormality was found in the data in the above step ST4, the data error status is output as the response e (step ST9) and the process is terminated. Further, when the data train length was not a multiple of 8 in the above step ST5, the data train length error status is output as the response e (step ST10) and the process is terminated.

Next, the CPU 12 of the terminal equipment 11 transmits the command B having the format as shown in FIGURE 13A to the CPU 22 of the IC card 21. Here, the command includes the function code which directs the operation to store the transmitted transaction key in the RAM 232 and the transaction key data KEY7 which was previously transmitted to the terminal equipment 11 from the card 21. Upon receipt of this command B, the CPU 12 of the IC card 21 stores the transaction key data KEY7 transmitted by the command B in the RAM 232.

Hereinafter, the CPU 22 of the IC card 21 transmits the response b having the format as shown in FIGURE 13B to the CPU 12 of the terminal equipment 11. The response b includes the function code showing the response to the command B described above and the status showing the normal completion. At this time, the CPU 12 of the terminal equipment 11 erases the transaction key data KEY7 previously received from the IC card 21 and stored in the memory 13 after retransmitting the command B to the IC card 21.

The flow of the process operation of the CPU 22 of the IC card 21 in the communication between the terminal equipment 11 and the IC card 21 using the command B and the response b is omitted here as it has been already explained referring to FIGURE 20.

Next, in the step ST14 the CPU 2 of the host computer 1 converts (enciphers) the message M7, which is generated by the CPU 2, by the data converting function D of the data converter 9 in the CBC mode based on the transaction key data KEY7 to get the transaction key data M7' (= E (CBC) KEY (M7)) and transmits the message M7' to the terminal equipment 11. Upon receipt of the message M7', the CPU 12 of the terminal equipment 11 transmits the message M7' to the IC card 21 using the command C in the format as shown in FIGURE 14A.

This command C includes the function code which directs the deciphering operation of the received enciphered message, the specifier which specifies the key data to be used in the data conversion by the IC card 21, and the enciphered message M7' previously transmitted to the terminal equipment 11 from the host computer 1. In the example shown in FIGURE 4, the specifier specifies the transaction key data KEY7 stored in the RAM 232 by the command B in the step ST13.

Now, upon receipt of the command C, the CPU 222 of the IC card 21 executes the deciphering process by the data converter 27 using the transaction key data KEY7 specified by the specifier to get a message M7 (= D (CBC) K7 (M'7)) and transmits the response c in the format as shown in FIGURE 14 to the CPU 12 of the terminal equipment 11. The response referred to here includes the function code showing the response to the command C, the status showing the normal completion, and the message M7 obtained by the enciphering process. Thus, the terminal equipment 11 is able to receive the message M7 from the host computer 1.

The explanation of the flow of the process operation of the CPU 22 of the IC card 21 in the communication between the terminal equipment 11 and the IC card 21 using the command C and the response c is omitted as it has been provided previously referring to FIGURE 21.

Next, the process to transmit a message generated at the terminal equipment 11 to the host computer 1 is explained. First in the step ST15 the CPU 2 of the host computer 1 transmits the transaction key data KEY8 that is used by the IC card 21 in the next step ST16 to the terminal equipment using the key data K8 in the same procedure as in the above step ST13. The transaction key data KEY8 and the key data K8 referred to here have been stored in the memory 3 in advance. The CPU 21 of the IC card 21, when receiving the command B, stores the transaction key data KEY8 transmitted by the command B in the RAM 232.

Then, in the step ST16 the CPU 12 of the terminal equipment 11 transmits the message M8 which is generated by the CPU 12 itself to the IC card 21 using the command D in the format as seen in FIGURE 15A. The command D referred to here includes the function code which directs the enciphering operation of the transmitted message, the specifier which specifies the key data that is used in the data conversion in the IC card 21, and the message M8.

In the example shown in FIGURE 4, the key (KEY8) converted by the command B in the step ST15 is specified. Hereinafter, the communication process is executed in the procedure reverse to that in the step ST14 and the message 8 generated by the terminal equipment 11 is transmitted to the host computer 1.

The explanation of the flow of the process operation of the CPU 22 of the IC card 21 in the communication between the terminal equipment and the IC card 21 using the command D and the response d is omitted here as it has been provided previously referring to FIGURE 22.

Next, the case shown in FIGURE 5 shows the embodiment in the case where, on the system including the host computer 1, terminal equipment 11 and the IC card 21, the function to retain the transaction key restored in the IC card 21 in the memory 13 of the terminal equipment 11 in Case III is changed to retain the transaction key of the RAM 232 in the IC card 21.

First, the process to transmit a message generated at the host computer 1 to the terminal equipment is explained. In the step ST17 the CPU 2 of the host computer 1 performs the data conversion (data scramble) of the transaction key data KEY9 by the data converting function E1 of the first data converter 7 using the key data K9 to get a transaction key data KEY9' (= E1 K9 (KEY9)) and transmit this transaction key data KEY9' to the terminal equipment 11. Here, the transaction key data KEY9 and the key data K9 have been stored in the memory 3 in advance.

Upon receipt of the transaction key data KEY9', the CPU 12 of the terminal equipment 11 transmits a command F in a format as shown in FIGURE 17A to the CPU 22 of the IC card 21. Here, the command F includes a function code which directs the operation to decipher and store the received enciphered transaction key data in the RAM 232, the specifier which specifies the key data to be used in the data conversion in the IC card, and the transaction key data KEY9' previously transmitted to the terminal equipment 11 from the host computer 1.

Upon receipt of the command F, the CPU 22 of the IC card 21 performs the data conversion by the data converting function D1 of the first data converter using the key data K9 specified by the specifier and by deciphering the transaction key data KEY9', gets a transaction key data KEY9 (= D1 K9 (KEY9')) and transmits a response f in a format as shown in FIGURE 17B to the CPU 12 of the terminal equipment 11 as the response to the command F. The response f includes a function code showing the response to the command F and the status showing the normal completion.

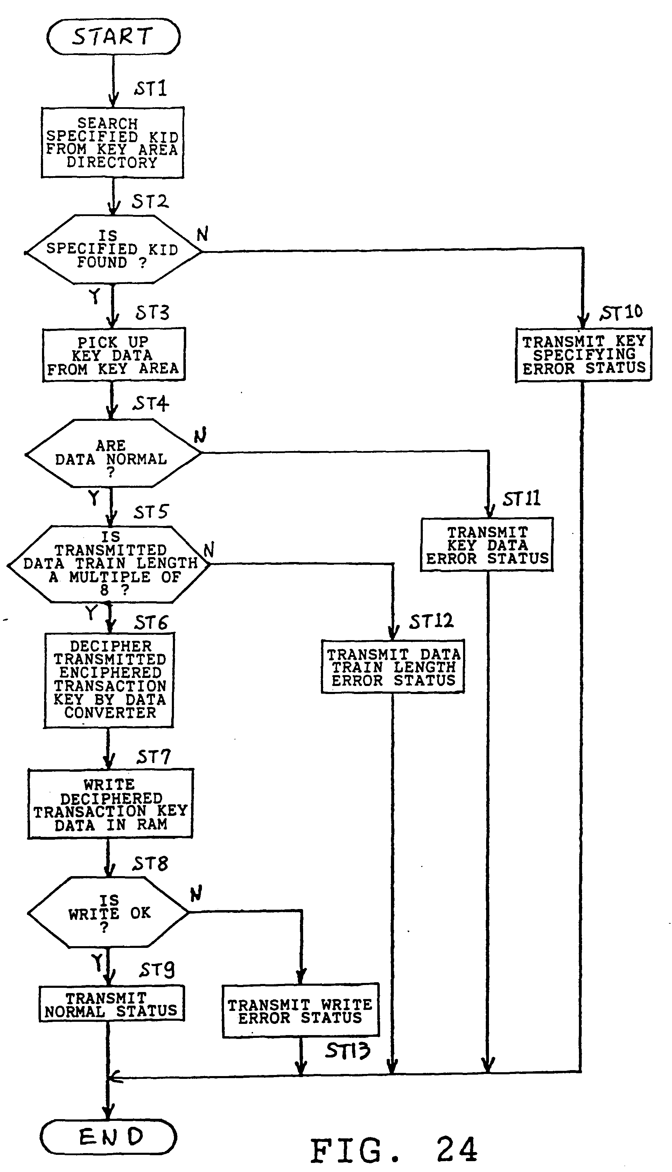

Now, the flow of the process operation of the CPU 22 of the IC card 21 in the communication between the terminal equipment 11 and the IC card 21 using the command F and the response f is explained referring to FIGURE 24. First, when the command F is transmitted from the terminal equipment 11, the CPU 22 of the IC card 21 retrieves the KID (Key Data No.) that is the value of the key specifier of this command F from the key area directory 31 in the EEPROM 231 (step ST1) and judges whether the specified KID has been found (step ST2). When the KID has been found, the CPU 22 picks up the key data corresponding to the KID from the key area 33 in the memory 23 (step ST3).

If the specified KID was not found in the step ST2, the CPU 22 outputs the key specifying error status t as the response f (step ST9) and terminates the process. After picking up the key data from the key area in the step ST3, the CPU 22 judges whether this key data has abnormality (step ST4) and if no abnormality is found in the key data, judges whether the data train length of the received enciphered transaction key data is a multiple of 8 (step ST5).

When the data train length of the received data is normal, after the data conversion (deciphering) of the data train transmitted from the terminal equipment 11 by the first data converter 25 using the picked up key data (step ST6), the CPU 22 writes the deciphered transaction key data KEY9 in the RAM 232 (step ST7) and judges whether the deciphered transaction key data KEY9 has been properly written (step ST8). When it has been properly written, the normal completion status is output as the response f (step ST9) and the process is terminated.

On the other hand, if the write was not properly made in the step ST8, the write error status is output as the response f (step ST9) and the process is terminated. If an abnormality was found in the key data in the above step ST4, the data error status is output as the response f (step ST11) and the process is terminated. Further, when the data train length was not a multiple of 8 (the data train length was not proper) in the above step ST5, the data train length error status is output as the response f (step ST12) and the process is terminated.

Next, in the step ST18 the CPU 12 of the terminal equipment 11 transmits the command C in the format as shown in FIGURE 14A to the CPU 22 of the IC card 21. This command C includes the function code which directs the deciphering operation of the received enciphered message, the specifier which specifies the key data, and the enciphered message M9' previously transmitted to the terminal equipment 11 from the host computer 1.

Upon receipt of this command C, the CPU 22 of the IC card 21 transmits the message M9 generated in the host computer 1 to the terminal equipment 11 in the same procedure as in Case III in the step ST3. The explanation of this procedure is omitted here as it has been already described in the above.

Next, the process to transmit a message generated at the terminal equipment 11 to the host computer 1 is explained. First, in the step ST19 the CPU 2 of the host computer 1 transmits the transaction key data KEY10 to be used by the IC card 21 in the next step ST20 to the terminal equipment 11 using the key data K10 in the same procedure as in the above step ST17. the transaction key data KEY10 and the key data K10 referred to here have been stored in the memory 3 in advance. Upon receipt of the command F from the terminal equipment 11, the CPU 12 of the IC card 21 stores the transaction key data KEY 10 transmitted by the command F in the RAM 232.

Next, in the step ST20 the CPU 12 of the terminal equipment 11 transmits the message M10 generated by the CPU 12 itself to the IC card 21 using the command D in the format as seen in FIGURE 15A. Here, the command D includes the function code which directs the enciphering operation of the message to be transmitted, the specifier which specifies the key data to be used for the data conversion in the IC card 21, and the message M6.

In the example shown in FIGURE 5, the specifier specifies the transaction key data KEY10 that was transmitted by the command F in the step ST19. Upon receipt of this command D, the CPU 21 of the IC card 21 transmits the message M10 generated in the terminal equipment 11 to the host computer 1 in the same procedure as in Case III shown in the step ST12. The explanation of this procedure is omitted there as it has been described in Case III.

Next, Case VI shown in FIGURE 6 shows the embodiment where the transaction key data restored in the IC card 21 and retained in the memory 13 in Case IV is changed to be retained in the RAM 232 of the IC card 21 on the system including the host computer 1, the terminal equipment 11 and the IC card 21.

First, the process to transmit a message generated at the host computer 1 to the terminal equipment 11 is explained. In the step ST21, the CPU 2 of the host computer 1 performs the data conversion (the data scramble) of the transaction key data KEY11 by the data converting function d of the data converter 9 based on the key data K11 to get a transaction key data KEY11' (= DK11 (KEY11)) and transmits the transaction key data key11' to the terminal equipment 11. Here, the transaction key data KEY11 and the key data K11 have been stored in the memory 3 in advance.

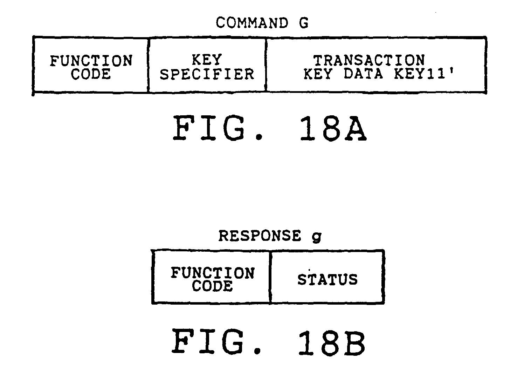

Upon receipt of the transaction key data KEY11', the CPU 12 of the terminal equipment 11 transmits a command G having a format as shown in FIGURE 18A to the CPU 222 of the IC card 21. The command G includes a function code which directs the operation to decipher the enciphered transaction key received and store it in the RAM 232, the key specifier which specifies the key data to be used by the IC card 21 for the data conversion process, and the transaction key data KEY11' previously transmitted to the terminal equipment 11 from the host computer 1.

Now, upon receipt of the command G, the CPU 22 of the IC card 21 converts and deciphers the transaction key data KEY11' to get a transaction key data KEY11 (= DK11 (KEY11')) by the data conversion function E of the data converter 27 using the key data K11 specified by the specifier described above, and transmits a response g having a format as shown in FIGURE 18B to the CPU 12 of the terminal equipment 11 as the response to the command G. Here, the response g includes a function code showing the response to the command g and the status showing the normal completion.

Here, the flow of operation of the CPU 22 of the IC card 21 in the communication between the terminal equipment and the IC card 21 using the command G and the response g is explained referring to FIGURE 24.

First, when the command G is transmitted from the terminal equipment 11, the CPU 22 of the IC card 21 retrieves the KID (key Data No.) which is the value of the key specifier of this command G from the key area directory 31 in the EEPROM 231 (step ST1) and judges whether the specified KID has been found (step ST2). When the KID has been found, the CPU 22 picks up the key data K3 in the memory 23 (step ST3).

When the specified KID was not found in the step ST2, the key specifying error status is output as the response g (step ST9) and the process is terminated. After picking up the key data from the key area in the step ST3, the CPU 22 judges whether this key data is proper (step ST4) and if the key data is proper, the CPU 22 judges if the data train length of the received enciphered transaction key data is a multiple of 8 (step ST5).

When no abnormality is found in the data train length, the data train transmitted from the terminal equipment 11 by the command G is converted (deciphered) by the first data converter 25 using the key data picked up as described above (step ST6) and then, the deciphered transaction key data KEY9 is written in the RAM 232 (step ST7). And, the CPU 22 judges whether the writing has been properly made (step ST8) and when it has been properly made, outputs the normal completion status as the response g (step ST9) and terminates the process.

On the other hand, when the write was not properly made in the step ST8, the write error status is output as the response g (step ST13) and the process is terminated. When any abnormality was found in the key data in the above step ST4, the data error status is output as the response g (step ST11) and the process is terminated. Further, when the data train length was not a multiple of 8 in the above step ST5, the data train length error status is output as the response g (step ST12) and the process is terminated.

Next, in the step ST22 the CPU 12 of the terminal equipment 11 transmits the command C in the format as shown in FIGURE 14A to the CPU 22 of the IC card 21. Here, the command C includes the function code which directs the deciphering of the enciphered message transmitted and the specifier which specifies the key data. Upon receipt of this command C, the CPU 22 of the IC card 21 transmits the message M11 generated in the host computer 1 to the terminal equipment in the same procedure as in the step ST14 in the case described above. The explanation of this procedure is omitted here as it has been already described in the above.

Next, the process to transmit a message generated in the terminal equipment 11 to the host computer 1 is explained. First, in the step ST23 the CPU 2 of the host computer 1 transmits the transaction key data KEY 12 which is used in the IC card 21 in the next step ST24 to the terminal equipment 11 using the key data K12 in the same procedure as in the above step ST21. Here, the transaction key data KEY 12 and the key data K12 have been stored in the memory 3 in advance. When receiving the command G, the CPU 12 of the IC card 21 stores the transaction key data KEY 12 transmitted by the command G in the RAM 232.

Then, in the step ST24 the CPU 12 of the terminal equipment 11 transmits the message M12 which is generated by the CPU 12 itself to the IC card 21 using the command D which is in the format as seen in FIGURE 15A. Here, the command D includes the function code which directs the deciphering of the transmitted message, the specifier which specifies the key data to be used for the data conversion (enciphering) in the data conversion in the IC card 21, and the message M6.

In the example shown in FIGURE 6, the transaction key data (KEY12) transmitted by the command G is specified by the specifier in the step ST23. Upon receipt of this command D, the CPU 12 of the IC card 21 transmits the message M12 generated in the terminal equipment 11 to the host computer 1 in the same procedure as in the step ST22. This procedure has been explained above and is omitted here.

The data converters in the embodiments from Case I to Case VI explained before are equivalent to the enciphering and deciphering algorithms such as, for instance, DES (Data Encryption Standard), etc. Here, the enciphering and deciphering algorithms are not necessarily required to be exclusively provided for respective units and may be stored in a memory, for instance, as a program.

When the transaction key data KEYn and the transaction key data KEYn' which have been scrambled by the data converting function are both in 8 bytes,

$$KEYn = E \ (CBC) \ Kn \ (KEYn') = EKn \ (KEYn')$$

$$KEYn' = D \ (CBC) \ Kn \ (KEYn') = DKn \ (KEYn')$$

and the above commands A and D can perform equivalent operations by the commands C and E, respectively.

Further, in the commands F and G, the data conversion key specifier to be used in the data conversion process and the key specifier to specify the existing key for converting to the restored key may be the same specifier. In this case, the transaction key used in the previous data conversion process becomes the key which is used in the data conversion process of this time.

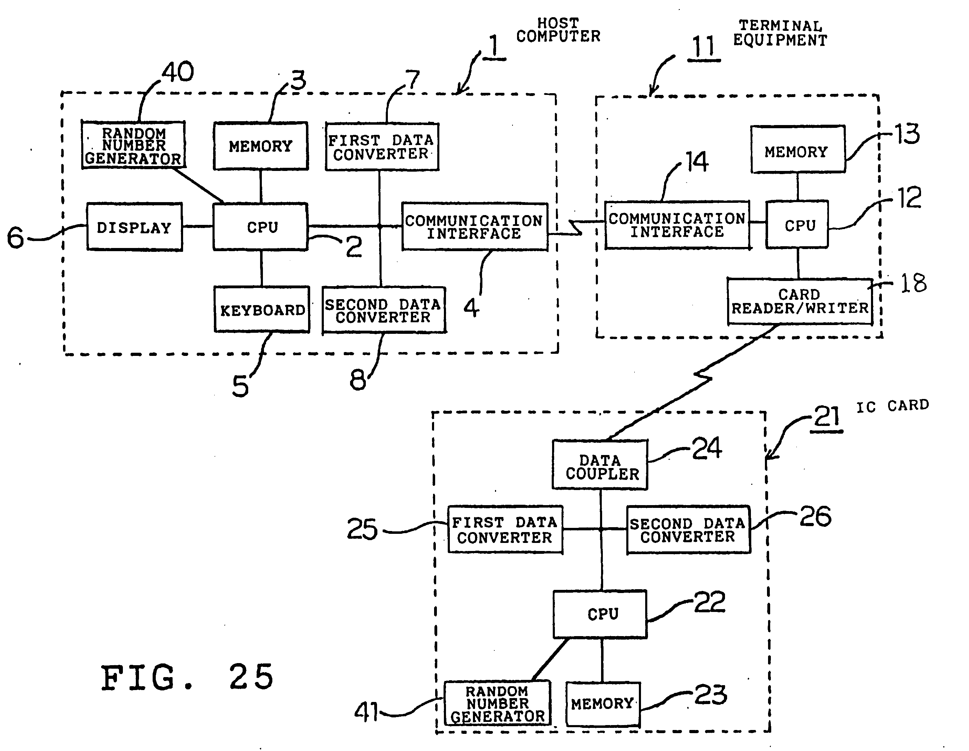

Further, in the above embodiment it has been assumed that the key data K1 through K12 and the transaction key data KEY1 through KEY12 have been stored in the memory in advance. On the system which has the random number generators 40 and 41 as seen in FIGURE 25, data generated from the random number generators 40 and 41 may be used as the key data in the data conversion. Further, other components of the data communication system shown in FIGURE 25 are the same as those of the system shown in FIGURE 9 and therefore, the same numbers are assigned to the identical items and the explanations are omitted here.

Out of six data communication systems explained above, those described as Case I, Case III and Case V, both the host computer and the opposing equipment must be provided with an encipherer and a decipherer.

However, on the data communication systems explained as Case II, Case IV and Case VI, if the host computer has, for instance, the decipherer only and the equipment opposing to the host computer has the encipherer only, the equivalent security level can be maintained. Further, the encipherer and the decipherer may be reversely provided to the host computer and the terminal equipment.

Further, out of the above six data communication systems, those shown in Cases III and IV have higher processing weight in the IC card than those shown in Cases I and II and the data security is improved. Furthermore, the data communication systems shown in Cases V and VI have higher processing weight in the IC card than those shown in

EP 0 500 244 B1

Cases III and IV and the data security is improved. Especially, on the data communication system shown in Cases V and VI, the number of commands required for the IC card is rather less and furthermore, the access flow between the host computer and the terminal equipment when transmitting messages becomes common, and the burden on the terminal equipment in the command control is thus decreased.

In this embodiment, when a data train is input to the IC card using a command, its result of operation is output as a response. The result of operation may be retained and called out in response to a request by other command.

As described above in detail, when the data communication system of this embodiment is used, it is not necessarily required to have elements dedicated for data enciphering/deciphering and even when equipments with less resource are used as system components, it is possible to execute the data scramble on the line system.

Further, as key data used in the data communication are not left in the memory of the IC card used in the data communication system in this embodiment, the data security on the on-line system is sharply improved. In addition, when inputting the transaction key into the IC card, it is possible to specify whether the transaction key is retained in the EEPROM or the RAM, the data communication can be executed flexibly corresponding to a system using the transaction key.

Further, the IC card explained in this embodiment is capable of selecting key data for restoring the transaction key used in the data communication and it is therefore not necessary to fix the key to restore the transaction key by a system and the functions of the IC card are not restricted by a system.

When the enciphering/deciphering of data to be transmitted to the IC card, the transaction key for the data enciphering/deciphering is stored in the RAM 232 which is a volatile memory. Therefore, when the data transaction ends and the IC card is put in the off-line state, the transaction key data vanish. Thus, the transaction key required in the communication system is not left in the IC card and the security on the on-line communication system is improved. Furthermore, the memory capacity can be stored because the transaction key is not kept retained in the memory.

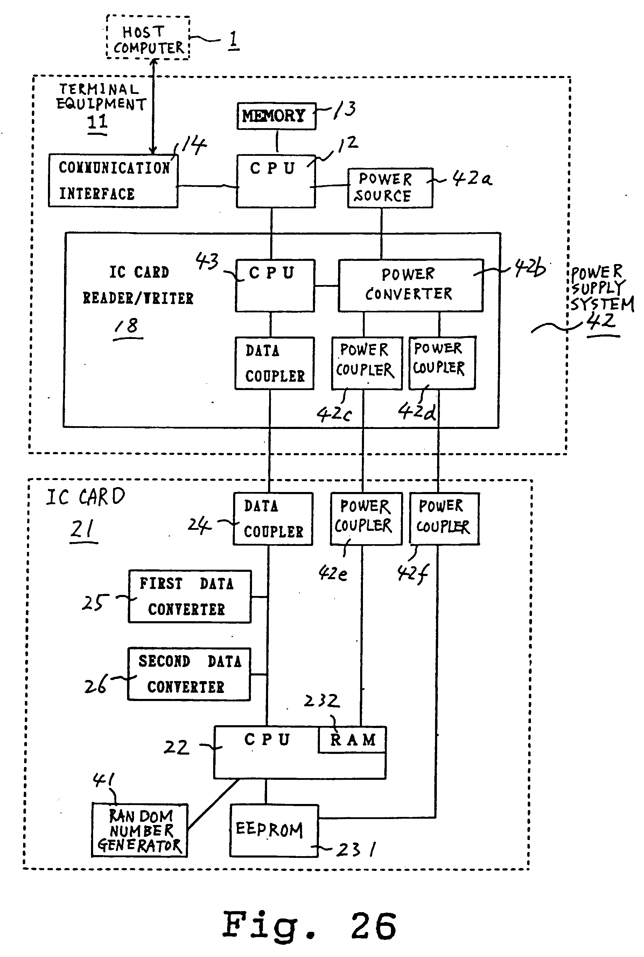

Referring now to FIGURE 26, a modification of the system according to the present invention will be briefly described. FIGURE 26 shows a detailed construction of a part of FIGURE 25, i.e., a section consisting of the terminal equipment 11 and the IC card 21 in FIGURE 25. As shown in FIGURE 26, this embodiment includes a power supply system 42. The power supply system 42 includes a power supply 42a in the terminal equipment 11, a power converter 42b in the card reader/writer 18 of the terminal equipment 11, a pair of power couplers 42c and 42d also in the card reader/writer 18, and another pair of power couplers 42e and 42f in the IC card 21. The CPU 12 of the terminal equipment 11 is coupled to the power source 42a for controlling the power source 42a. The power converter 42b is coupled to the the power source 42a and a CPU 43 equipped in the card reader/writer 18 so that the power converter 42b converts the power from the power source 42a to a pair of suitably adjusted powers under the control of the CPU 43. A first adjusted power is supplied to the RAM 232 in the IC card 21 through a first set of the power couplers 42c and 42e. A second adjusted power is supplied to the EEPROM 231 through a second set of the power couplers 42d and 42f.

In the embodiment of FIGURE 26, when the communication between the host computer 1 (see FIGURE 25) and the IC card 21 through the terminal equipment 11 has completed, the supplied powers, i.e., the first and the second adjusted powers are interrupted. Then the memory in the EEPROM 231 is held in spite of the interruption of the first adjusted power, but the memory in the RAM 232 is eliminated in response to the interruption of the second adjusted power from the terminal equipment 11.

As described above, according to the present invention, for instance, on the on-line system including a host computer and the portable electronic apparatus according to the present invention, the transaction key data are not left in the portable electronic apparatus at time of the off-line.

Thus, when communicating enciphered data between a host computer and a terminal equipment the communication system according to the present invention is realized with a relatively simple construction.

As described above, the present invention can provide an extremely preferable data communication system for electronic apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

**Claims**

1. A cipher communication method for communicating transaction data between

a first electronic device which includes a first converting means for scrambling transaction data Mi into a enciphered data Mi' according to a prescribed encipher function E, and
a second electronic device which includes a second converting means for descrambling the ciphered data Mi' to a deciphered data Mi, according to a decipher function D inverse to the encipher function E,

CHARACTERIZED IN THAT the method comprising the steps of:

a first step at the first electronic device using the first converting means to scramble the transaction data Mi to the ciphered data Mi' to be transferred to the second electronic device, according to the prescribed encipher function E;
a second step for transferring the enciphered transaction data Mi', from the first electronic device to the second electronic device;
a third step at the second electronic device using the second converting means to descramble the enciphered transaction data Mi' transferred by the second step from the first electronic device to the deciphered data Mi, according to the decipher function D;
a fourth step at the second electronic device using the second converting means to scramble another transaction data Mj to another ciphered data Mj' to be transferred to the first electronic device, according to the decipher function D;
a fifth step for transferring the enciphered transaction data Mj', from the second electronic device to the first electronic device; and
a sixth step at the first electronic device using the first converting means to descramble the enciphered transaction data Mj' transferred by the fifth step from the second electronic device to the deciphered data Mj, according to the encipher function E.

2. A method as claimed in claim 1, further comprising

a seventh step of generating a key data which directs the first step of scrambling according to the first converting means in the first electronic device;
an eighth step of scrambling the key data to be transferred to the second electronic device according to the prescribed function of the first converting means in the first electronic device;
a ninth step of transferring the scrambled key data, from the first electronic device to the second electronic device; and
a tenth step of descrambling the scrambled key data transferred from the first electronic device.

3. A method as claimed in claim 2, characterised in that the sixth step of descrambling includes an eleventh step of descrambling the scrambled transaction data transferred from the first electronic device in accordance with the key data generated in the seventh step of generating.

4. A method as claimed in claim 3, characterised in that the fourth step of scrambling includes a twelfth step of scrambling the transaction data to be transferred to the first electronic device in accordance with the key data descrambled in the tenth step.

5. A cipher communication system for communicating transaction data between

a host electronic device (1) which includes a first converting means (9) for scrambling a transaction data Mi into a enciphered data Mi' (E(Mi) = Mi') according to a prescribed encipher function E, and
an IC card which includes a second converting means (17) for descrambling the ciphered data Mi' (D(Mi') = D(E(Mi)) = Mi) to a deciphered data Mi according to a decipher function D inverse to the encipher function E,

CHARACTERIZED IN THAT:

the IC card includes means (12, 13) for scrambling another transaction data Mj to be transferred to the host device according to the decipher function D, using the second converting means (17) into another ciphered data Mj' (D(Mj) = Mj') to transfer the ciphered data Mj' to the host device therefrom; and
the host device includes means (2, 3) for descrambling the deciphered data Mj' transferred from the IC card according to the encipher function E using the first converting means (9) into the transaction data Mj (E(Mj') = E(D(Mj)) = Mj).

**6.** An IC card as claimed in claim 5, further characterised by:

memory means (13) for storing data; and
writing means (22) for writing the transaction data descrambled by the second converting means (25) into the memory means (23).

**Patentansprüche**

**1.** Verschlüsselungsübertragungsverfahren zur Übertragung von Transaktionsdaten zwischen

einer ersten elektronischen Einrichtung, die eine erste Konvertierungseinrichtung umfaßt, um Transaktionsdaten Mi gemäß einer vorbestimmten Verschlüsselungsfunktion E in verschlüsselte Daten Mi' zu verwürfeln, und
einer zweiten elektronischen Einrichtung, die eine zweite Konvertierungseinrichtung umfaßt, um die verschlüsselten Daten Mi' gemäß einer zur Verschlüsselungsfunktion E inversen Entschlüsselungsfunktion D in entschlüsselte Daten Mi zu entwürfeln,

dadurch gekennzeichnet, daß das Verfahren die folgenden Schritte umfaßt:

einen ersten Schritt bei der ersten elektronischen Einrichtung unter Verwendung der ersten Konvertierungseinrichtung, um die Transaktionsdaten Mi gemäß der vorbestimmten Verschlüsselungsfunktion E in die verschlüsselten Daten Mi' zu verwürfeln, die zur zweiten elektronischen Einrichtung übertragen werden sollen;
einen zweiten Schritt, um die verschlüsselten Transaktionsdaten Mi' von der ersten elektronischen Einrichtung zu der zweiten elektronischen Einrichtung zu übertragen;
einen dritten Schritt bei der zweiten elektronischen Einrichtung unter Verwendung der zweiten Konvertierungseinrichtung, um die verschlüsselten Transaktionsdaten Mi', die im zweiten Schritt von der ersten elektronischen Einrichtung übertragen worden sind, gemäß der Entschlüsselungsfunktion D in die entschlüsselten Daten Mi zu entwürfeln;
einen vierten Schritt bei der zweiten elektronischen Einrichtung unter Verwendung der zweiten Konvertierungseinrichtung, um andere Transaktionsdaten Mj gemäß der Entschlüsselungsfunktion D in andere verschlüsselte Daten Mj' zu verwürfeln, die zur ersten elektronischen Einrichtung übertragen werden sollen;
einen fünften Schritt, um die verschlüsselten Transaktionsdaten Mj' von der zweiten elektronischen Einrichtung zu der ersten elektronischen Einrichtung zu übertragen; und
einen sechsten Schritt bei der die erste elektronische Einrichtung unter Verwendung der ersten Konvertierungseinrichtung, um die verschlüsselten Transaktionsdaten Mj', die im fünften Schritt von der zweiten elektronischen Einrichtung übertragen worden sind, mit der Verschlüsselungsfunktion E in die entschlüsselten Daten Mj zu entwürfeln.

**2.** Verfahren nach Anspruch 1, das weiterhin umfaßt

einen siebten Schritt, um Codierdaten zu erzeugen, mit denen der erste Schritt der Verwürfelung mit der ersten Konvertierungseinrichtung in der ersten elektronischen Einrichtung durchgeführt wird;
einen achten Schritt, um die zur zweiten elektronischen Einrichtung zu übertragenden Codierdaten entsprechend der vorbestimmten Funktion der ersten Konvertierungseinrichtung in der ersten elektronischen Einrichtung zu verwürfeln;
einen neunten Schritt, um die verwürfelten Codierdaten von der ersten elektronischen Einrichtung zur zweiten elektronischen Einrichtung zu übertragen; und
einen zehnten Schritt, um die verwürfelten Codierdaten, die von der ersten elektronischen Einrichtung übertragen worden sind, zu entwürfeln.

**3.** Verfahren nach Anspruch 2, dadurch gekennzeichnet, daß der sechste Schritt der Entwürfelung einen elften Schritt umfaßt, um die verwürfelten Transaktionsdaten, die von der ersten elektronischen Einrichtung übertragen worden sind, gemäß der im siebten Schritt erzeugten Codierdaten zu entwürfeln.

**4.** Verfahren nach Anspruch 3, dadurch gekennzeichnet, daß der vierte Schritt der Verwürfelung einen zwölften Schritt umfaßt, um die zu der ersten elektronischen Einrichtung zu übertragenden Transaktionsdaten gemäß der in dem zehnten Schritt entwürfelten Codierdaten zu verwürfeln.

**5.** Verschlüsselungsübertragungssystem zur Übertragung von Transaktionsdaten zwischen

einer elektronischen Zentraleinrichtung (1), die eine erste Konvertierungseinrichtung (9) umfaßt, um Transaktionsdaten Mi gemäß einer vorbestimmten Verschlüsselungsfunktion E in verschlüsselte Daten Mi' (E(Mi) = Mi') zu verwürfeln, und
einer IC-Karte, die eine zweite Konvertierungseinrichtung (17) umfaßt, um die verschlüsselten Daten Mi' (D (Mi') = D(E(Mi)) = Mi) gemäß einer zur Verschlüsselungsfunktion E inversen Entschlüsselungsfunktion D in entschlüsselte Daten Mi zu entwürfeln,

dadurch gekennzeichnet, daß:

die IC-Karte Einrichtungen (12, 13) enthält, um andere Transaktionsdaten Mj, die zur Zentraleinrichtung übertragen werden sollen, gemäß der Entschlüsselungsfunktion D unter Verwendung der zweiten Konvertierungseinrichtung (17) in andere verschlüsselte Daten Mj' (D(Mj) = Mj') zu verwürfeln, um die verschlüsselten Daten Mj' von dort aus zur Zentraleinrichtung zu übertragen; und
die Zentraleinrichtung Einrichtungen (2, 3) umfaßt, um die verschlüsselten Daten Mj', die von der IC-Karte übertragen worden sind, unter Verwendung der ersten Konvertierungseinrichtung (9) gemäß der Verschlüsselungsfunktion E in die Transaktionsdaten Mj (E(Mj') = E(D(Mj)) = Mj) zu entwürfeln.

**6.** IC-Karte nach Anspruch 5, außerdem gekennzeichnet durch:

Speichereinrichtungen (13) zum Speichern von Daten; und
Schreibeinrichtungen (22), um die Transaktionsdaten, die durch die zweite Konvertierungseinrichtung (25) entwürfelt worden sind, in der Speichereinrichtung (23) zu speichern.

## Revendications

**1.** Procédé de communication de chiffrage pour communiquer des données de transaction entre :

un premier dispositif électronique qui comprend un premier moyen convertisseur pour brouiller des données de transaction Mi en données chiffrées Mi' selon une fonction de chiffrage prévue E, et
un second dispositif électronique qui comprend un second moyen convertisseur pour rétablir les données chiffrées Mi' en données déchiffrées Mi selon une fonction de déchiffrage D inverse de la fonction de chiffrage E,

caractérisé en ce que le procédé comprend les opérations suivantes :

une première opération effectuée dans le premier dispositif électronique en utilisant le premier moyen convertisseur pour brouiller les données de transaction Mi en données chiffrées Mi' devant être transférées au second dispositif électronique, selon la fonction prévue de chiffrage E ;
une seconde opération pour transférer les données de transaction chiffrées Mi' du premier dispositif électronique au second dispositif électronique ;
une troisième opération effectuée dans le second dispositif électronique en utilisant le second moyen convertisseur pour rétablir les données chiffrées de transaction Mi' transférées par la seconde opération du premier dispositif électronique en données déchiffrées Mi selon la fonction de déchiffrage D ;
une quatrième opération effectuée dans le second dispositif électronique en utilisant le second moyen convertisseur pour brouiller d'autres données de transaction Mj en d'autres données chiffrées Mj' destinées à être transférées au premier dispositif électronique, selon la fonction de déchiffrage D ;
une cinquième opération pour transférer les données de transaction chiffrées Mj' du second dispositif électronique au premier dispositif électronique ; et
une sixième opération effectuée dans le premier dispositif électronique en utilisant le premier moyen convertisseur pour rétablir les données de transaction chiffrées Mj' transférées par la cinquième opération depuis le second dispositif électronique en données déchiffrées Mj, selon la fonction de chiffrage E.

**2.** Procédé selon la revendication 1, comprenant encore : une septième opération de génération de données de clé qui dirige la première opération de brouillage par le premier moyen convertisseur dans le premier dispositif électronique ;

une huitième opération de brouillage des données de clé à transférer au second dispositif électrique selon la fonction prévue du premier moyen convertisseur dans le premier dispositif électronique ;
une neuvième opération pour transférer les données de clé brouillées du premier dispositif électronique au second dispositif électronique ; et
une dixième opération de rétablissement des données de clé brouillées transférées depuis le premier dispositif électronique.

3. Procédé selon la revendication 2, caractérisé en ce que la sixième opération de rétablissement comprend une onzième opération de rétablissement des données de transaction brouillées transférées depuis le premier dispositif électronique selon les données de clé générées à la septième opération de génération.

4. Procédé selon la revendication 3, caractérisé en ce que la quatrième opération de brouillage comprend une douzième opération de brouillage des données de transaction à transférer au premier dispositif électronique selon les données de clé rétablies à la dixième opération.

5. Système de communication chiffrée pour communiquer des données de transaction entre :

un dispositif électronique central (1) qui comprend un premier moyen convertisseur (9) pour brouiller des données de transaction Mi en données brouillées Mi' (E(Mi) = Mi') selon une fonction de brouillage prévue E, et une carte de circuits intégrés qui comprend un second moyen convertisseur (17) pour rétablir les données chiffrées Mi' (D(Mi') = D(E(Mi)) = Mi) en données déchiffrées Mi selon une fonction de déchiffrage D inverse de la fonction de chiffrage E,

caractérisé en ce que :

la carte de circuits intégrés contient des moyens (12, 13) pour brouiller d'autres données de transaction Mj à transférer au dispositif central selon une fonction de déchiffrage D en utilisant le second moyen convertisseur (17) en d'autres données chiffrées Mj' (D(Mj) = Mj') pour transférer les données chiffrées Mj' au dispositif central de cette carte ; et
le dispositif central comprend des moyens (2, 3) pour rétablir les données déchiffrées Mj' transférées depuis la carte de circuits intégrés selon la fonction de chiffrage E en utilisant les premiers moyens de conversion (9) en données de transaction Mj (E(Mj') = E(D(Mj)) = Mj).

6. Carte de circuits intégrés selon la revendication 5, caractérisée par :

des moyens de mémoire (13) pour mémoriser des données ; et
des moyens d'écriture (22) pour écrire les données de transaction rétablies par le second moyen convertisseur (25) dans les moyens de mémoire (23).

FIG. 1

FIG. 2

FIG. 3

FIG. 4

FIG. 5

FIG. 6

FIG. 7

EP 0 500 244 B1

HOST
COMPUTER

TERMINAL
EQUIPMENT

MEMORY

DATA
CONVERTER

DISPLAY

CPU

COMMUNICATION
INTERFACE

COMMUNICATION
INTERFACE

DATA
CONVERTER

MEMORY

CPU

KEYBOARD

FIG. 8

FIG. 9

EP 0 500 244 B1

FIG. 10

EP 0 500 244 B1

231 →

| DIRECTORY POSITION DEFINING INFORMATION STORAGE AREA | 30 |
| KEY AREA POSITION DEFINING INFORMATION STORAGE AREA | 31 |
| DATA AREA DEFINING INFORMATION STORAGE AREA | 32 |
| DATA AREA | 33 |
| KEY AREA | 34 |

## FIG. 11A

| KEY SPECIFIER | KEY AREA HEAD ADDRESS | AREA SIZE |

## FIG. 11B

| KEY SPECIFIER | KEY AREA HEAD ADDRESS | KEY SIZE |

## FIG. 11C

COMMAND A

| FUNCTION CODE | KEY SPECIFIER | TRANSACTION KEY DATA KEY5' |
|---|---|---|

# FIG. 12A

RESPONSE a

| FUNCTION CODE | STATUS | TRANSACTION KEY DATA KEY5 |
|---|---|---|

# FIG. 12B

COMMAND B

| FUNCTION CODE | TRANSACTION KEY DATA KEY5 |
|---|---|

# FIG. 13A

RESPONSE b

| FUNCTION CODE | STATUS |
|---|---|

# FIG. 13B

COMMAND C

| FUNCTION CODE | KEY SPECIFIER | MASSAGE M5' |

## FIG. 14A

RESPONSE c

| FUNCTION CODE | STATUS | MASSAGE M5 |

## FIG. 14B

COMMAND D

| FUNCTION CODE | KEY SPECIFIER | MASSAGE M6 |

## FIG. 15A

RESPONSE d

| FUNCTION CODE | STATUS | ENCIPHERED MASSAGE M6' |

## FIG. 15B

COMMAND E

| FUNCTION CODE | KEY SPECIFIER | TRANSACTION KEY DATA KEY7' |
|---|---|---|

## FIG. 16A

RESPONSE e

| FUNCTION CODE | STATUS | ENCIPHERED TRANSACTION KEY DATA KEY7' |
|---|---|---|

## FIG. 16B

COMMAND F

| FUNCTION CODE | KEY SPECIFIER | TRANSACTION KEY DATA KEY9' |
|---|---|---|

## FIG. 17A

RESPONSE f

| FUNCTION CODE | STATUS |
|---|---|

## FIG. 17B

COMMAND G

| FUNCTION CODE | KEY SPECIFIER | TRANSACTION KEY DATA KEY11' |
|---|---|---|

# FIG. 18A

RESPONSE *g*

| FUNCTION CODE | STATUS |
|---|---|

# FIG. 18B

START

*ST1*

SEARCH
SPECIFIED KID
FROM KEY AREA
DIRECTORY

*ST2*

IS
SPECIFIED KID
FOUND ?

N

Y

*ST3*

PICK UP
KEY DATA
FROM KEY AREA

*ST4*

IS
DATA NORMAL
?

N

Y

*ST5*

IS
TRANSMITTED
DATA TRAIN LENGTH
A MULTIPLE OF
8 ?

N

Y

*ST6*

DECIPHER
TRANSMITTED
ENCIPHERED
TRANSACTION
KEY DATA
BY DATA
CONVERTER

*ST7*

TRANSMIT
NORMAL STATUS
& DECIPHERED
TRANSACTION
KEY

*ST8*

TRANSMIT
KEY SPECIFYING
ERROR STATUS

*ST9*

TRANSMIT
KEY DATA
ERROR STATUS

*ST10*

TRANSMIT DATA
TRAIN LENGTH
ERROR STATUS

END

FIG. 19

START

ST1

IS
TRANSMITTED
DATA TRAIN LENGTH
A MULTIPLE OF
8 ?

N

Y

ST2

WRITE
TRANSACTION KEY
DATA IN RAM

ST6

TRANSMIT DATA
TRAIN LENGTH
ERROR STATUS

ST3

IS
WRITE OK
?

N

Y

ST4

TRANSMIT
NORMAL STATUS

ST5

TRANSMIT
WRITE ERROR
STATUS

END

FIG. 20

START

ST1
PICK UP
TRANSACTION KEY
DATA FROM RAM

ST2
ARE
DATA NORMAL
?

N →

ST3
IS
TRANSMITTED
DATA TRAIN LENGTH
A MULTIPLE OF
8 ?

N →

ST6
TRANSMIT
KEY DATA
ERROR STATUS

ST7
TRANSMIT DATA
TRAIN LENGTH
ERROR STATUS

ST4
DECIPHER
TRANSMITTED
MESSAGE
BY DATA
ENCIPHERED
CONVERTER

ST5
TRANSMIT
NORMAL STATUS
& DECIPHERED
MESSAGE

END

FIG. 21

START

ST1
PICK UP
TRANSACTION KEY
DATA FROM RAM

ST2
ARE
DATA NORMAL
?  — N

Y

ST3
IS
TRANSMITTED
DATA TRAIN LENGTH
A MULTIPLE OF
8 ?  — N

Y

ST6
TRANSMIT
KEY DATA
ERROR STATUS

ST4
ENCIPHER
TRANSMITTED MESSAGE
BY DATA CONVERTER

ST7
TRANSMIT DATA
TRAIN LENGTH
ERROR STATUS

ST5
TRANSMIT
NORMAL STATUS
& ENCIPHERED
MESSAGE

END

FIG. 22

37

START

ST1
SEARCH
SPECIFIED KID
FROM KEY AREA
DIRECTORY

ST2
IS
SPECIFIED KID
FOUND ?

N →

ST8
TRANSMIT
KEY SPECIFYING
ERROR STATUS

Y

ST3
PICK UP
KEY DATA FROM
KEY AREA

ST4
ARE
DATA NORMAL
?

N →

ST9
TRANSMIT
KEY DATA
ERROR STATUS

Y

ST5
IS
TRANSMITTED
DATA TRAIN LENGTH
A MULTIPLE OF
8 ?

N →

ST10
TRANSMIT
DATA TRAIN
LENGTH
ERROR STATUS

Y

ST6
DECIPHER
TRANSMITTED
ENCIPHERED
MESSAGE
BY DATA
BY DATA
CONVERTER

ST7
TRANSMIT
NORMAL STATUS
& DECIPHERED
TRANSACTION KEY

END

FIG. 23

START

ST1
SEARCH SPECIFIED KID FROM KEY AREA DIRECTORY

ST2
IS SPECIFIED KID FOUND ?

— N →

ST10
TRANSMIT KEY SPECIFYING ERROR STATUS

Y

ST3
PICK UP KEY DATA FROM KEY AREA

ST4
ARE DATA NORMAL ?

— N →

Y

ST5
IS TRANSMITTED DATA TRAIN LENGTH A MULTIPLE OF 8 ?

— N →

Y

ST11
TRANSMIT KEY DATA ERROR STATUS

ST6
DECIPHER TRANSMITTED ENCIPHERED TRANSACTION KEY BY DATA CONVERTER

ST12
TRANSMIT DATA TRAIN LENGTH ERROR STATUS

ST7
WRITE DECIPHERED TRANSACTION KEY DATA IN RAM

ST8
IS WRITE OK ?

— N →

Y

ST9
TRANSMIT NORMAL STATUS

TRANSMIT WRITE ERROR STATUS

ST13

END

FIG. 24

FIG. 25

EP 0 500 244 B1

Fig. 26